# EUROPÄISCHE PATENTSCHRIFT

(11) **EP 3 539 373 B1**
(45) Veröffentlichungstag und Bekanntmachung des Hinweises auf die Patenterteilung: **23.08.2023**
(21) Anmeldenummer: 19168642.7
(22) Anmeldetag: 14.03.2013
(51) Int. Cl.: A01K 1/12, A01J 5/003, A01J 5/007, A01J 5/017, A01J 5/04, A01J 7/02

(54) **PLATZTEILER EINER MELKSTANDANORDNUNG UND MELKSTANDANORDNUNG**
SPACE DIVIDER OF A MILKING PARLOR ARRANGEMENT, AND MILKING PARLOR ARRANGEMENT
PORTILLON DE SÉPARATION POUR UNE INSTALLATION DE TRAITE ET INSTALLATION DE TRAITE

(30) Priorität: 14.03.2012 DE 102012102132; 02.11.2012 DE 102012110503
(43) Veröffentlichungstag der Anmeldung: 18.09.2019
(62) Teilanmeldung aus: 13709138.5
(73) Patentinhaber: GEA Farm Technologies GmbH, 59199 Bönen (DE)
(72) Erfinder: KRONE, Otto, 49479 Laggenbeck (DE); HENSEL, Derk, 06917 Jessen (DE); MADER, Thomas, 33378 Rheda-Wiedenbrück (DE); TECKENTRUP, Rolf, 59302 Oelde (DE); HÖNSCHEID, Armin, 59199 Bönen (DE); HILLE, Dieter, 59302 Oelde (DE); WIETHOFF, Magnus, 59514 Welver (DE); TROSSEHL, Marc, 59368 Werne (DE); BALKENHOL, Reinhard, 33098 Paderborn (DE)
(74) Vertreter: Kleine, Hubertus

(56) Entgegenhaltungen:
- EP-A1- 1 266 565
- WO-A1-01/67852
- WO-A1-2007/114778
- US-A- 5 596 945

## Beschreibung

Die Erfindung betrifft einen Platzteiler einer Melkstandanordnung nach dem Oberbegriff des Anspruchs 1. Die Erfindung bezieht sich auch auf eine Melkstandanordnung.

Eine derartige Melkstandanordnung wird zum maschinellen Melken von milchgebenden Tieren verwendet. Milchgebende Tiere sind beispielsweise Kühe, Ziegen, Schafe usw. Die Melkstandanordnung weist Melkstände auf, die durch Platzteiler getrennt sind. Der Melkvorgang kann mittels so genannter Melkroboter automatisiert werden. Es sind z.B. Melkkarusselle im Einsatz.

Unter dem Begriff Melkstandanordnung sind Anordnungen von Melkständen zu verstehen, wobei eine Winkelstellung eines zu melkenden Tieres bzw. eine Winkelstellung einer gedachten Längsachse eines zu melkenden Tieres in einem Melkstand zu einem Referenzpunkt bzw. zu einer Referenzlinie zwischen 0° und 90° betragen kann. Als Referenzpunkt wird beispielsweise eine Grube oder ein durch Personal zugänglicher Bereich (z.B. Arbeitsgang) verwendet, welche der Aufenthaltsort des Melkpersonals ist. Als Referenzlinie wird beispielsweise die Längsseite einer geradlinigen Grube oder eine Tangente einer kreisförmigen Grube verwendet.

Melkstandanordnungen sind z.B. bewegliche und unbewegliche Melkstandanordnungen. Bewegliche Melkstandanordnungen sind z.B. Melkkarusselle als Außenmelker und Innenmelker, beide Arten mit beliebiger Drehrichtung. So genannte Side-By-Side-Melkstände können auch als bewegliche Melkstandanordnungen ausgebildet sein. Weiterhin sind Gruppenmelkstände auch unbeweglich, wie z.B. Fischgrätmelkstände und Tandemmelkstände. Diese Auflistung ist nur beispielhaft und nicht eingrenzend.

Die Druckschrift EP 1 084 611 B1 beschreibt eine Roboterarmkonstruktion mit einer schwenkbaren Trageinheit für ein Melkzeug. Die Konstruktion ist an einer oder mehreren Schienen entlang einer oder mehrerer Melkboxen bewegbar.

Die Druckschrift US 5,596,945 A zeigt einen dualen Melkstand, bei dem ein zentral im Melkstand angeordneter Melkroboter eines automatischen Melksystems die Tiere in jedem der beiden seitlichen Stehplätze melken kann. Der Melkroboter weist einen verfahrbaren Rahmen auf, der sich entlang zweiter Schienen in Längsrichtung im Melkstand bewegen kann. An dem verfahrbaren Rahmen ist eine Armeinrichtung angeordnet, die Melkzeug trägt. Das Schienensystem, der verfahrbare Rahmen und die sich daran befindende Armeinrichtung liegen dabei offen zwischen den beiden Tierpositionen. Servicerelevante Komponenten finden sich verteilt an diesem Aufbau.

Aus der Druckschrift WO 01/67852 A1 ist Melkkarussell mit einer Mehrzahl von Melkständen bekannt. Die Melkstände sind durch Gitter voneinander getrennt, wobei diese Gitter am äußeren Rand des Melkstands in einer Säule befestigt sind. Die Säule weist einen Bauraum auf, der durch Klappen oder Türen abgedeckt ist, um im Inneren der Säule angeordnete Elemente zugänglich zu machen. Auch hier sind servicerelevante Komponenten verteilt an dem Aufbau zu finden.

Die bestehende Automatisierungstechnik ist auf Grund geringen Durchsatzes in gemolkenen Kühen/Tieren pro Stunde nicht oder nur eingeschränkt für Großanlagen geeignet. Die immer weiter steigenden Anforderungen insbesondere nach hohen Durchsatzzahlen und kontinuierlichem Betrieb erfordern bei heutigen Melkrobotern, die komplex und kostenaufwendig sind, eine gemeinsame Nutzung für mehrere Melkplätze. Dies kann sich nachteilig auswirken, u.a. aufgrund hoher Komplexität und damit verbundener hoher Ausfallwahrscheinlichkeit, diskontinuierlicher Betrieb, gesperrte Bereiche für das Personal (Sicherheit im Roboterbereich).

Vor diesem Hintergrund besteht die Aufgabe der Erfindung darin, eine verbesserte Anordnung sowie einen Melkstand bereitzustellen und den möglichen Anlagendurchsatz zu verbessern, indem Ausfallzeiten reduziert werden.

Diese Aufgabe wird durch einen Platzteiler mit den Merkmalen des Anspruchs 1 und durch eine Melkstandanordnung mit den Merkmalen des Anspruchs 10 gelöst.

Ein erfindungsgemäßer Platzteiler einer Melkstandanordnung für mindestens einen Melkstand zum Melken von milchgebenden Tieren, wobei der Platzteiler an einer Längsseite des Melkstands angeordnet ist, weist eine Armeinrichtung mit einem Melkzeug auf, welche aus einer Parkposition in eine Arbeitsposition und zurück verstellbar ist, wobei die Armeinrichtung mit dem Melkzeug in der Parkposition in dem Platzteiler angeordnet ist und in die Arbeitsposition, in welcher das Melkzeug von einer Längsachse des Platzteilers beabstandet ist, derart verstellbar ist, dass das Verstellen des Melkzeugs aus der Parkposition in dem Platzteiler in die Arbeitsposition von der Seite des zu melkenden Tieres zwischen dessen Vorderbeinen und Hinterbeinen unter das Euter des zu melkenden Tieres erfolgt. Der Platzteiler weist eine Verkleidung mit zwei selbsttragenden Halbschalen auf, wobei ein Abschnitt der Halbschalen einen Hinterteilabschnitt des Platzteilers bildet. Weiter weist der Platzteiler mindestens eine in einen Aufnahmeraum in dem Hinterteilabschnitt einsetzbare und wieder herausnehmbare Serviceeinheit auf, die alle servicerelevanten Funktionsgruppen und Komponenten, darunter Messeinrichtungen und Sensoren, aufweist, und die innerhalb des Aufnahmeraums arretierbar und mit einer Installation über Verbindungseinrichtung(en) verbindbar ist.

Auf diese Weise ist ein schnelles und einfaches Austauschen von servicerelevanten Teilen möglich, und Ausfallzeiten können so reduziert werden.

In dem Hinterteilabschnitt des Platzteilers ist die Serviceeinheit für Wartungs- und Reparaturzwecke leicht erreichbar. Dazu kann der Aufnahmeraum durch eine Abdeckung verschlossen sein, was einen Zugriff erleichtert.

Dadurch, dass die Serviceeinheit alle servicerelevanten Funktionsgruppen und Komponenten aufweist, sind diese somit konzentriert an einem Ort und leicht erreichbar.

Da die Serviceeinheit auch alle milchführenden Funktionsgruppen und Komponenten aufweist, ist deren Erreichbarkeit für Wartungs-, Reinigungs- und Reparaturarbeiten somit ebenfalls bedeutend erleichtert.

Dadurch, dass die Serviceeinheit innerhalb des Aufnahmeraums arretierbar und mit einer Installation über Verbindungseinrichtung(en) verbindbar ist, wird eine schnelle und präzise wiederholbare Anordnung ermöglicht
Die Installation umfasst zentral verlegte Leitungen, welche die Einrichtungen der Serviceeinheit mit einer Steuereinheit verbinden, die an einer Oberseite eines Mittelabschnitts des Platzteilers angeordnet ist. Dies ergibt einen kompakten und raumsparenden Aufbau.

In einer noch weiteren Ausführung ist vorgesehen, dass die Serviceeinheit einen Tragrahmen aufweist, welcher in dem Aufnahmeraum einsetzbar und arretierbar ist und alle Komponenten, z.B. eine Milchgruppe mit milchführenden Teilen, trägt. Auf diese Weise kann die Serviceeinheit einfach und schnell aus- und eingebaut werden.

Bei einer Melkstandanordnung mit nebeneinander angeordneten rechtwinkligen Melkständen, die jeweils parallele Längsseiten aufweisen, wie es z.B. bei einer Side-By-Side-Anordnung der Fall ist, ist der Platzteiler parallel zu einer gedachten Längsachse des zu melkenden Tieres angeordnet. Dabei wird vereinfacht angenommen, dass das zu melkende Tier mit seiner gedachten Längsachse während des Melkvorgangs in einem Idealzustand still steht.

Im Falle einer Melkstandanordnung mit kreisförmig angeordneten Melkständen wie bei einem Melkkarussell sind die Längsseiten der Melkstände nicht parallel. In diesem Fall sind die Längsseiten Abschnitte von Radien eines Kreises des Melkkarussells und schneiden sich in gedachter Verlängerung im Mittelpunkt dieses Kreises bzw. im Drehpunkt des Melkkarussells, wobei sie einen Mittelpunktswinkel bilden. Die gedachte Längsachse des zu melkenden Tiers verläuft im Idealfall auch durch den Drehpunkt und halbiert den Mittelpunktswinkel. Dieser Fall ist im weiteren Verlauf hier mit dem Begriff "annähernd parallel" abgekürzt.

Ein zu melkendes Tier kann in den mit dem Platzteiler versehenen Melkstand eintreten, ohne mit der Armeinrichtung in Berührung zu kommen. Erst wenn das Tier in dem Melkstand steht, wird das Melkzeug von der Seite her in die Arbeitsposition unter das Tier verstellt. Dazu kann es notwendig sein, dass der gesamte Platzteiler aus einer Ruheposition heraus beim Tierwechsel in eine ideale Melkposition für das neue Tier verfahren wird, beispielsweise in Längsrichtung des Platzteilers. Der Platzteiler ist in seiner Ausführung so ausgelegt, dass kein zusätzlicher Platzbedarf entsteht. Dadurch ergibt sich der Vorteil, dass die Tiere weiterhin Bauch an Bauch stehen können. Dies hat weitere Vorteile: Zum Einen können auf diese Weise viele Tiere auf kleinstmöglichem Raum gemolken werden, wodurch Kosten für die Melkstandanordnung und auch für das zugehörigen Gebäude niedrig gehalten werden können. Zum Anderen bleiben die Laufwege für Melkpersonal und die Tiere kürzer, d.h. Zeitersparnis.

Mit dem Verstellen der Armeinrichtung mit dem Melkzeug von der Seite her zwischen den Vorderbeinen und Hinterbeinen unter das Euter des Tieres wird das Melkzeug außerhalb des Bereiches zwischen den Hinterbeinen verfahren. Im Bereich zwischen den Hinterbeinen besteht eine stark erhöhte Verschmutzungsgefahr durch Tierexkremente. Dieser Bereich wird nun vermieden, was eine Verschmutzung des Melkzeugs und der Armeinrichtung erheblich verringert. Dadurch werden auch Reinigungszeiten und somit Kosten eingespart.

Ein weiterer Vorteil dieser kompakten Bauweise liegt darin, dass eine Nachrüstung des Platzteilers in bestehende Anlagen möglich ist, ohne Melkstände/Melkplätze zu verlieren.

Personal kann jederzeit und ohne durch Vorrichtungen, d.h. die Tragarmeinrichtung und Zubehör, behindert zu sein in den Melkvorgang eingreifen und hat leichten Zugriff. Zusätzliche Schutzvorrichtungen sind nicht erforderlich. Wenn die Melkstandanordnung ein Melkkarussell ist, kann dieses ohne Unterbrechung seine Drehung beibehalten, da das Melkpersonal z.B. von außen überall eingreifen kann. Eine Gefährdung des Melkpersonals wird erheblich reduziert.

In einer Ausführung ist die Armeinrichtung in einem Vollautomatikbetrieb von der Parkposition in der Arbeitsposition in eine Ansetzposition zum automatischen Ansetzen des Melkzeugs an die Zitzen des zu melkenden Tieres verstellbar, wobei das Melkzeug mindestens einen Positionssensor aufweist. Dabei wird das Melkzeug von der Armeinrichtung unter das Euter des zu melkenden Tieres bewegt, und die Zitzenbecher werden mithilfe des Positionssensors zur Zitzenerfassung, der Armeinrichtung und der Antriebseinheit automatisch an die Zitzen angesetzt. Dieser Betrieb wird auch als Automatikbetrieb bezeichnet.

Jeder der Zitzenbecher kann dabei einzeln positioniert werden
Alternativ ist in einer anderen Ausführung vorgesehen, dass die Armeinrichtung in einem Halbautomatikbetrieb von der Parkposition in die Arbeitsposition verstellbar ist, wobei die Arbeitsposition eine feste Vorposition ist, die durch Anschlagmittel vorher festlegbar ist, wobei das Melkzeug in der Vorposition in einer für einen Melker günstigen Position steht. Dabei wird das Melkzeug mithilfe von einfachen mit einstellbaren Anschlägen versehenen Antriebsmitteln, z.B. Pneumatikzylinder, in eine für das Melkpersonal griffgünstige feste Vorposition unter das Euter des zu melkenden Tieres verstellt. Dann kann der hinter dem Tier stehende Melker die Zitzenbecher einfach und leicht ergreifen und sie an die Zitzen ansetzen. Sobald der erste Zitzenbecher an eine Zitze angesetzt ist, wird dies z.B. mithilfe eines pneumatischen Drucksensors erkannt und das Melkzeug aus der festen Vorposition in eine freie waagerechte Position freigegeben. In senkrechter Position verbleibt das Melkzeug wie beim automatischen Ansetzen in einer Schwebeposition. So ist gewährleistet, dass wie beim automatischen Ansetzen das Melkzeug nach dem Ansetzvorgang der Bewegung des zu melkenden Tieres folgt.

Diese Vorpositionierung des Melkzeugs mit der Armeinrichtung bei diesem so genannten semi-automatischen Melken ist so gestaltet, dass der Melker die Zitzenbecher zum Ansetzen an die Zitzen nur sehr wenig bewegen und so gut wie keine Kraft aufwenden muss. Dies spart Kraft und Zeit. Da in dieser Ausführung weder ein Positionssensor noch eine Antriebsvorrichtung zur Ansteuerung aller Zitzenpositionen erforderlich ist, sondern nur ein einfacher Antrieb, kann diese Ausführung vorteilhaft kostengünstig sein. Ein weiterer Vorteil dabei ist, dass diese semi-automatische Ausführung in die automatische Ausführung aufgerüstet werden kann. Dies ist aufgrund einer Mehrzahl gleicher Bauteile möglich.

Die Armeinrichtung weist einen Oberarm und einen damit verschwenkbar gekoppelten Unterarm auf. Dies ergibt eine einklappbare Konstruktion, die in dem Platzteiler in der Parkposition untergebracht und geschützt ist.

In einer Ausführung ist die Armeinrichtung mit einer Antriebseinheit verbunden, welche am Platzteiler oberhalb des zu melkenden Tieres angeordnet ist. Die Antriebseinheit kann aber auch unterhalb einer Melkplattform angeordnet sein. Damit können alle Antriebs- und Steuerelemente in dem Platzteiler zentral und integriert vorgesehen sein.

In einer alternativen Ausführung kann die Armeinrichtung mit einer Antriebseinheit verbindbar ausgebildet sein. So können z.B. fünf Antriebseinheiten in einem Ansetzbereich an einer Schiene zusammen mit einer Bewegung der Melkstandanordnung verfahren werden, wobei sie an die Armeinrichtung zum Verstellen derselben in die Arbeitsposition und in die Parkposition angedockt werden. Damit können viele Melkstände mit einer geringen Antriebszahl versorgt werden.

In einer weiteren Ausführung weist die Antriebseinrichtung mindestens einen Servomotor auf. Der mindestens eine Servomotor kann mit einem geeigneten Getriebe gekoppelt sein. In einer noch weiteren Ausführung weist die Antriebseinrichtung mindestens einen Direktantrieb auf.

Wenn die Antriebseinheit mindestens einen Torque-Motor aufweist, ergibt sich eine gewisse Elastizität. Ein Überlastschutz der Armeinrichtung kann dadurch unterstützt werden, z.B. gegen Tritte des zu melkenden Tieres. Da die Torque-Motoren kein Getriebe benötigen, kann die Armeinrichtung in gewisser Weise bei Tritten zurückweichen. Schäden werden verringert, sowohl an der Armeinrichtung als auch am Tier. Die Torque-Motoren können bei Manipulation der Armeinrichtung, z.B. durch Berührung durch die Beine des Tieres, nachgeben. Darüber hinaus ist auch ein Notmelken möglich, wenn bei einem stromlosen Zustand das Melkzeug vom Melker angelegt werden muss, da keine Widerstände von Getriebe und Motor dabei überwunden werden müssen. Auch wenn die Torque-Motoren antriebsmäßig stromlos sind, können ihre Winkelgeber eingeschaltet sein, wodurch immer eine Information über ihre Stellung und die Stellung der Armeinrichtung mit dem Melkzeug vorhanden ist.

Natürlich können auch andere Antriebe Verwendung finden, wie z.B. Pneumatikzylinder.

Ein weiterer Vorteil hierbei ist, dass sobald alle Zitzenbecher an die Zitzen des Euters angesetzt sind, die Motoren stromlos geschaltet werden können. Und dadurch eine Leichtgängigkeit der Armeinrichtung erreicht wird, wodurch das Melkzeug den Bewegungen des Tieres folgen kann. Dadurch entstehen keine negativen Hebelkräfte auf die Zitzen des Euters des Tieres.

Ein weiterer Vorteil bei dieser so genannten passiven Nachführung im Gegensatz zu einer aktiven Nachführung mithilfe der Antriebseinheit ist eine große Energieeinsparung, da Energie nur zum Ansetzen des Melkzeugs benötigt wird. Das kann z.B. nur ca. 5 % der Melkzeit eines Tieres sein.

In einer weiteren Ausführung ist die Armeinrichtung mit dem Melkzeug in der Parkposition in dem Platzteiler in einer Öffnung einer Verkleidung des Platzteilers (4) angeordnet. Dies ergibt einen kompakten und schmalen Aufbau.

Weiterhin kann die Öffnung der Verkleidung des Platzteilers mit der darin in der Parkposition angeordneten Armeinrichtung mit dem Melkzeug mit einer Schutzabdeckung verschließbar sein. Dadurch kann eine Verletzungsgefahr der Tiere, insbesondere von unruhigen Tieren, verringert werden.

In einer weiteren Ausführung kann in dem Platzteiler eine Reinigungseinrichtung für das Melkzeug angeordnet sein. Unter dem Begriff Reinigungseinrichtung ist auch zu verstehen, dass eine Innenreinigung der Zitzenbecher und eine Außenreinigung erfolgen können. Natürlich ist auch eine Desinfektion vor und nach dem Melken möglich. Ebenfalls kann eine Zwischendesinfektion des Melkzeugs erfolgen. Dadurch wird der kompakte Aufbau mit zusätzlichen Funktionen verbessert. Ein Zeitbedarf für die Reinigung wird verringert, d.h. Verfahrwege zu Reinigungsstellen entfallen, da dies an Ort und Stelle vorgenommen werden kann.

Zusätzlich kann auch eine Zitzenbehandlungseinrichtung an dem Melkzeug vorgesehen sein, welche vor und nach dem Melken die Zitzen desinfiziert.

In einer anderen Ausführung kann die Armeinrichtung eine Parallelführung für das Melkzeug aufweisen. Wenn die Parallelführung Schubstangen und/oder Koppelstangen aufweist, oder aus Parallelführungstriebelementen gebildet ist, sind weder Messnoch Antriebssysteme für eine Parallelführung notwendig. Besonders vorteilhaft ist ein schmaler und raumsparender Aufbau, wenn die Parallelführung innerhalb der Arme der Armeinrichtung angeordnet ist. Außerdem sind keine zusätzlichen Schutzeinrichtungen erforderlich.

In einer anderen Ausführung können die Parallelführungstriebelemente Zugmittel, wie beispielsweise Riemen, sein. Diese können einen Überlastschutz unterstützen.

In einer weiteren Ausführung weist die Armeinrichtung mindestens einen Zugmitteltrieb auf. Riemen als Zugmittel sind äußerst geräuscharm. Für eine genaue Positionierung sind Zahnriemen vorteilhaft.

In einer noch weiteren Ausführung bildet der Platzteiler mit seinen Funktionseinheiten und Komponenten eine vormontierte komplette Einheit. Dadurch kann eine schnelle Montage und Demontage sowie auch eine Nachrüstung von vorhandenen Melkstandanordnungen leicht erfolgen. Die Funktionseinheiten und Komponenten des Platzteilers sind die Armeinrichtung und das Melkzeug. Weitere können die Antriebseinheit(en), die Reinigungseinrichtung, die Schutzabdeckung usw. sein.

Es ist vorteilhaft, dass die Armeinrichtung und das Melkzeug in der Parkposition scherenförmig zusammenklappbar sind, da auf diese Weise eine Breite des Platzteilers minimiert werden kann.

In einer Variante weist der Platzteiler eine Verkleidung aus zwei selbsttragenden Halbschalen auf. Diese können z.B. aus einem Edelstahlblech und mittels eines Hydroformverfahrens geformt sein. Dies ist besonders vorteilhaft, da so eine Traggerüst im Innenraum des Platzteilers entfallen kann und Raum für Funktionsgruppen und Komponenten schafft. Der Platzteiler kann so als ein autarkes Modul ausgebildet werden.

In einer weiteren Ausführung kann der Platzteiler mindestens eine einsetzbare und wieder herausnehmbare Serviceeinheit aufweisen. Ein solche austauschbare Serviceeinheit kann alle servicerelevanten Funktionsgruppen und Komponenten aufweisen. Dazu können auch alle milchführenden Funktionsgruppen und Komponenten und gehören. Auf diese Weise ist ein schnelles und einfaches Austauschen von servicerelevanten Teilen möglich, und Ausfallzeiten können so reduziert werden.

Für eine schnelle Austauschbarkeit kann der Platzteiler mit Schnellverschlüssen zum Anschluss an eine Infrastruktur eines zuzuordnenden Melkstands versehen sein.

Ein schneller Austausch eines Platzteilers, der ein Gewicht von z.B. 300 kg aufweisen kann, kann dadurch erleichtert werden, dass der Platzteiler mit Rollen zum Transport versehen ist. Auf diese Weise können Auswechselzeiten eines Platzteilers von 10 min realisiert werden, wodurch Ausfallzeiten reduziert werden.

Eine Melkstandanordnung zum Melken von milchgebenden Tieren kann mit dem oben beschriebenen Platzteiler versehen sein.

Die Melkstandanordnung kann ein Melkkarussell sein. Das Melkkarussell kann als Außenmelkkarussell ausgebildet sein.

Außerdem kann in einer weiteren Ausführung vorgesehen sein, dass die Melkstandanordnung mit einer Servicebühne versehen ist. Dadurch ist ein schneller Zugriff, Zugang und Wechsel von z.B. Platzteilern möglich, wobei eine Stilltandszeit der Melkstandanordnung minimiert wird.

Eine Melkstandanordnung kann als Side-by-Side, steile oder normale Fischgräten Melkstandanordnung ausgebildet sein. Dabei ist in einer Ausführung mindestens ein Platzteiler von einer Anzahl von Platzteilern in seiner Längsrichtung aus einer Melkstellung in eine Zugangsstellung und wieder zurück verstellbar, wobei ein Ende des mindestens einen Platzteilers, welches zu einer Grubenabtrennung einer Grube für Melker weist, in der Melkstellung näher an der Grubenabtrennung angeordnet ist als in der Zugangsstellung, und zwischen diesem Ende in der Zugangsstellung und der Grubenabtrennung ein Abstand für einen Zugang für zu melkende Tiere in einer Zugangsrichtung gebildet ist. Dadurch ist es möglich, dass alle Melkstände nacheinander von zu melkenden Tieren besetzt werden, ohne dass Melkstände leer bleiben. Der Abstand für den Zugang verhindert, dass die Tiere in Berührung mit der Grubenabtrennung oder mit den Enden kommen.

In einer alternativen Ausführung der Side-by-Side, steilen oder normalen Fischgräten Melkstandanordnung ist eine Anzahl Platzteiler in ihrer jeweiligen Längsrichtung aus einer Melkstellung in eine Zugangsstellung und wieder zurück verstellbar, wobei Enden der Anzahl von Platzteilern, welche zu einer Grubenabtrennung einer Grube für Melker weisen, in der Melkstellung näher an der Grubenabtrennung angeordnet sind als in der Zugangsstellung, und zwischen diesen Enden in der Zugangsstellung und der Grubenabtrennung ein Abstand für einen Zugang für zu melkende Tiere in einer Zugangsrichtung gebildet ist.

In einer weiteren Ausführung ist vorgesehen, dass die Anzahl Platzteiler separat, in Gruppen oder alle zusammen in ihrer jeweiligen Längsrichtung aus einer Melkstellung in eine Zugangsstellung und wieder zurück verstellbar sind. Damit ist es möglich einen Tierverkehr einfach und wirkungsvoll zu steuern.

In einer anderen Ausführung sind die Platzteiler so ausgebildet sind, dass sie in der Zugangsstellung erst einen Teilbereich des zugeordneten Melkstands für das jeweils zu melkende Tier freigeben, bis alle zu melkenden Tiere die Melkstände der Melkstandanordnung betreten haben, und danach den zugeordneten Melkstand vollständig freigeben. Hierbei kann der Tierverkehr leicht beeinflusst werden.

Dabei ist auch eine Durchlauferkennung möglich, wenn die Melkstandanordnung ein Durchlauferkennungssystem für die zu melkenden Tiere aufweist, welches in den Platzteilern angeordnet ist. So kann der Tierverkehr nicht nur gesteuert, sondern auch einfach überwacht werden.

Vorteilhafte Weiterbildungen und Ausgestaltungen des Melkzeugs bzw. des Melkstands sind Gegenstand der jeweiligen abhängigen Ansprüche.

Weitere Vorteile und Einzelheiten gehen aus dem in den Figuren der Zeichnung dargestellten Ausführungsbeispiel hervor. Hierbei zeigen:
- Figur 1: eine schematische Draufsicht auf ein erstes Ausführungsbeispiel einer erfindungsgemäßen Melkstandanordnung mit erfindungsgemäßen Platzteilern gemäß einem ersten Ausführungsbeispiel;
- Figur 2-2a: schematische Ansichten eines zweiten Ausführungsbeispiels der erfindungsgemäßen Melkstandanordnung mit den erfindungsgemäßen Platzteilern;
- Figur 3: eine schematische Draufsicht eines dritten Ausführungsbeispiels der erfindungsgemäßen Melkstandanordnung mit den erfindungsgemäßen Platzteilern;
- Figur 4: eine schematische Perspektivansicht des erfindungsgemäßen Platzteilers mit einer Armeinrichtung in einer Parkposition;
- Figur 5: die Perspektivansicht nach Figur 4 mit der Armeinrichtung in einer Arbeitsposition;
- Figur 6: eine Seitenansicht des erfindungsgemäßen Platzteilers;
- Figur 7 und 8: der erfindungsgemäße Platzteiler mit der Armeinrichtung in Parkposition in Draufsicht und Unteransicht;
- Figuren 9-11: der erfindungsgemäße Platzteiler in Rückansicht, Draufsicht und Unteransicht mit der Armeinrichtung in Arbeitsposition;
- Figur 12: eine perspektivische Teilansicht des erfindungsgemäßen Platzteilers mit der Armeinrichtung in Arbeitsposition von unten gesehen;
- Figur 13: eine erste Variation des erfindungsgemäßen Platzteilers mit der Armeinrichtung in Arbeitsposition;
- Figur 14: eine schematische Draufsicht auf eine Variation des ersten Ausführungsbeispiels der erfindungsgemäßen Melkstandanordnung mit den erfindungsgemäßen Platzteilern in einer zweiten Variation;
- Figuren 15-18: Schnittdarstellungen eines Antriebsabschnitts der Armeinrichtung der zweiten Variation des erfindungsgemäßen Platzteilers in unterschiedlichen Betriebsstellungen;
- Figur 19: eine dritte Variation des erfindungsgemäßen Platzteilers mit der Armeinrichtung in Arbeitsposition mit andockbarer Antriebseinheit von unten;
- Figuren 20-22: perspektivische Darstellungen einer ersten Variation der Armeinrichtung des erfindungsgemäßen Platzteilers in unterschiedlichen Ansichten;
- Figur 23: schematische Darstellungen eines Bewegungsablaufs der Armeinrichtung nach den Figuren 20 bis 22;
- Figur 24: eine perspektivische Darstellung einer zweiten Variation der Armeinrichtung des erfindungsgemäßen Platzteilers;
- Figuren 25-25d: unterschiedliche Darstellungen in unterschiedlichen Ansichten der zweiten Variation der Armeinrichtung nach Figur 24; und
- Figur 26: eine perspektivische Teilschnittdarstellung einer dritten Variation der Armeinrichtung des erfindungsgemäßen Platzteilers.
- Figur 27: eine schematische Draufsicht einer Variante des zweiten Ausführungsbeispiels nach Figur 2-2a;
- Figur 28: eine schematische Draufsicht einer Variante des dritten Ausführungsbeispiels nach Figur 3;
- Figur 29: eine schematische Draufsicht einer weiteren Variante des dritten Ausführungsbeispiels nach Figur 3;
- Figur 30: eine schematische Perspektivansicht des erfindungsgemäßen Platzteilers nach Figur 4 in einer Verkleidungsvariante;
- Figur 31: eine schematische Draufsicht auf den erfindungsgemäßen Platzteiler nach Figur 30;
- Figur 32-32b: schematische Ansichten des erfindungsgemäßen Platzteilers nach Figur 4 in einer weiteren Variante;
- Figur 33: eine schematische Perspektivansicht mehrerer Melkstände nach dem ersten Ausführungsbeispiel nach Figur 1;
- Figur 33a: eine schematische Draufsicht der Melkstände nach Figur 33;
- Figur 34: eine schematische Innenansicht der Variante nach Figur 32 mit einer eingesetzten Serviceeinheit;
- Figur 34a: die Innenansicht der Variante nach Figur 34 mit der herausgenommenen Serviceeinheit;
- Figur 35: eine schematische Perspektivansicht einer Serviceeinheit;
- Figur 36-36c: eine Side-by-Side Melkstandanordnung mit verstellbaren Platzteilern; und
- Figur 37-37a: eine Fischgrät-Melkstandanordnung mit verstellbaren Platzteilern.

In den Figuren sind gleiche bzw. ähnliche Funktionselemente mit gleichen Bezugszeichen versehen. In einigen Figuren ist eine Vertikalrichtung z angegeben.

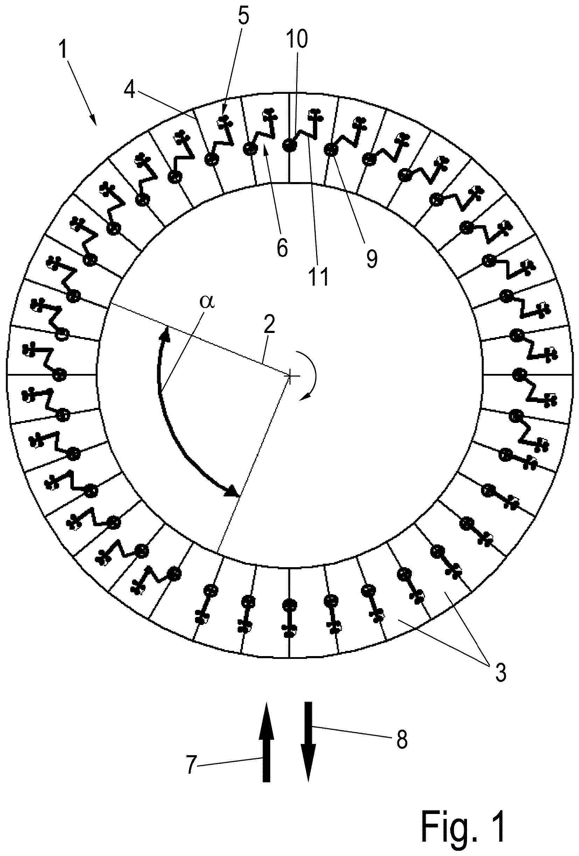

Figur 1 zeigt eine schematische Draufsicht auf ein erstes Ausführungsbeispiel einer erfindungsgemäßen Melkstandanordnung 1 mit erfindungsgemäßen Platzteilern nach einem ersten Ausführungsbeispiel.

Die Melkstandanordnung 1 ist nach Art eines so genannten Außenmelker-Karussells aufgebaut. Dabei stehen die zu melkenden Tiere mit ihrem Kopf zu einer Mitte, d.h. einem Drehpunkt 2, gerichtet. Das Karussell ist hier um den Drehpunkt 2 im Uhrzeigersinn drehbar. Natürlich kann das Karussell auch in einer anderen Ausführung gegen den Uhrzeigersinn drehbar sein. In diesem Beispiel sind sechsunddreißig Melkstände 3 am Umfang des Karussells angeordnet und durch Platzteiler 4 getrennt. Die Platzteiler 4 werden auch z.B. als Seitengitter bezeichnet und sind annähernd parallel zur Längsachse eines zu melkenden Tieres ausgerichtet. Die Melkstandanordnung 1 wird zum maschinellen Melken von milchgebenden Tieren, z.B. Kühe, mittels Melkzeugen 5 verwendet. Für jeden Melkstand 3 ist jeweils ein Melkzeug 5 vorgesehen, welches über eine Armeinrichtung 6 aus einer Parkposition in eine Arbeitsposition unter das Euter eines zu melkenden Tieres, z.B. einer Kuh, in einem Melkstand 3 verstellbar ist. Jedes Melkzeug 5 ist innerhalb eines Platzteilers 4 angeordnet. Die Positionen werden unten noch näher erläutert.

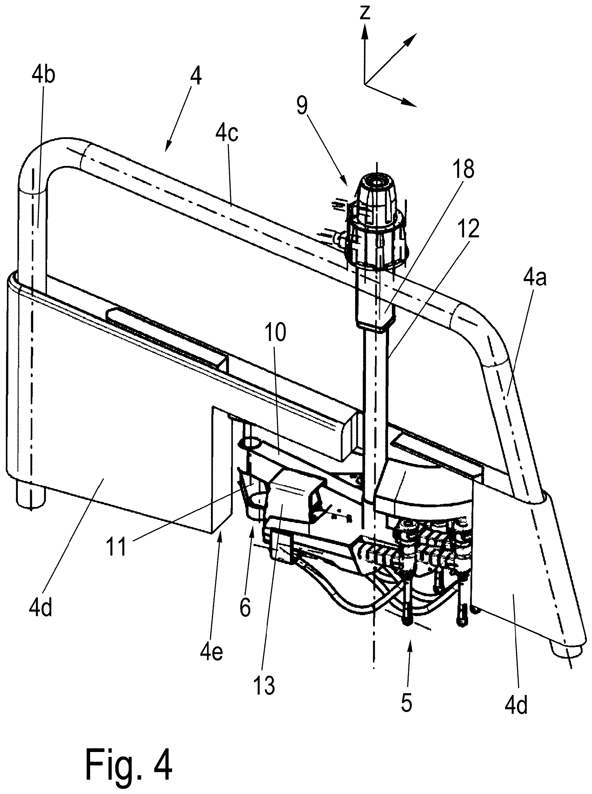

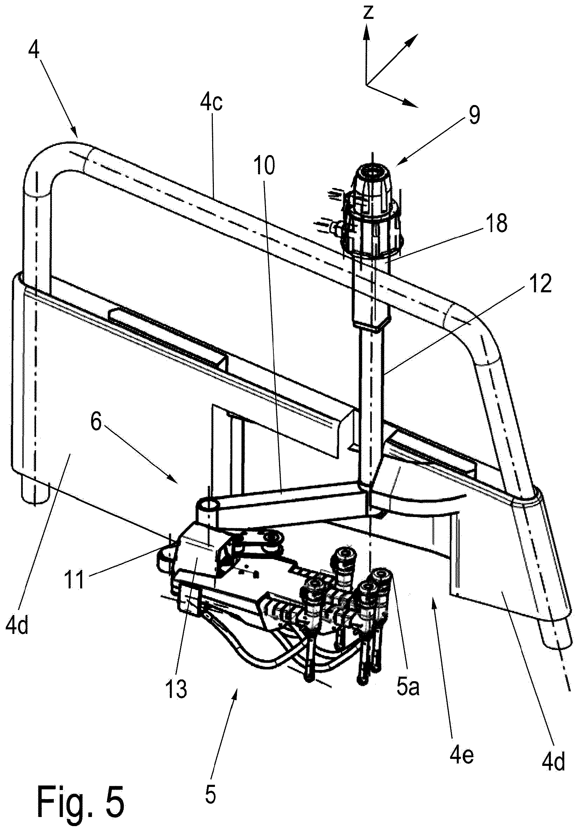

Das Karussell kann von den Tieren über einen Zugang 7 betreten und über einen Ausgang 8 wieder verlassen werden. Nachdem ein Tier einen Melkstand 3 betreten hat, ist es wichtig, dass das Tier eine vordefinierte Position einnimmt. Dies wird erreicht, indem die Platzteiler 4 einen eingegrenzten Melkstand 3 bilden. Wenn das Tier in dem Melkstand 3 steht, wird bevorzugt innerhalb eines Kreisabschnitts, der hier als Ansetzbereich α bezeichnet ist, das Melkzeug 5 aus der Parkposition in dem Platzteiler 4 in die Arbeitsposition von der Seite des Tieres zwischen seinen Vorderbeinen und Hinterbeinen unter den Euter des Tieres verstellt und an diesen mit Hilfe einer Positionssensors 13 (siehe Figur 4, 5) angesetzt. Ein Ansetzen kann aber prinzipiell an jeder Position des Karussells erfolgen, z.B. wenn ein Melkzeug wieder abgefallen ist. In dem ersten Ausführungsbeispiel der Platzteiler 4 ist an jedem Platzteiler 4 eine Antriebseinheit 9 angeordnet, welche mit der Armeinrichtung 6 in Verbindung steht. Nach abgeschlossenem Melkvorgang wird das Melkzeug 5 von dem zu melkenden Tier mittels Armeinrichtung 6 und Antriebseinheit 9 wieder abgenommen oder fällt von selbst in eine Warteposition bzw. Melkendeposition und wird danach in die Parkposition verstellt.

Alle Melkstände 3 sind am Außenumfang der Melkstandanordnung 1 von einem Melker frei zugänglich, so dass er jederzeit bei einem Melkvorgang eingreifen kann. Dieser Arbeitsbereich ist daher von zusätzlichen Vorrichtungen freigehalten. Eine Gefährdung des Melkers ist minimiert. Das Melkkarussell kann ständig in Drehbewegung verbleiben; selbst der Innenbereich einer/eines solchen Melkanordnung/Melksystems ist für eine Überwachungsperson jederzeit ohne Gefahr für diese Person zugänglich.

Das Melkzeug 5 wird seitlich an das zu melkenden Tier in dem Melkstand 3 heranbewegt und von der Seite des Tieres unter dessen Euter positioniert.

Die Armeinrichtung 6 weist einen Oberarm 10 und einen Unterarm 11 auf und hat die Funktion, das Melkzeug 5 gewichtsneutral zu tragen und so leichtgängig zu sein, dass sie den Bewegungen des zu melkenden Tieres folgt.

Die Armeinrichtung 6 wird unten noch näher in verschiedenen Variationen ausführlich beschrieben.

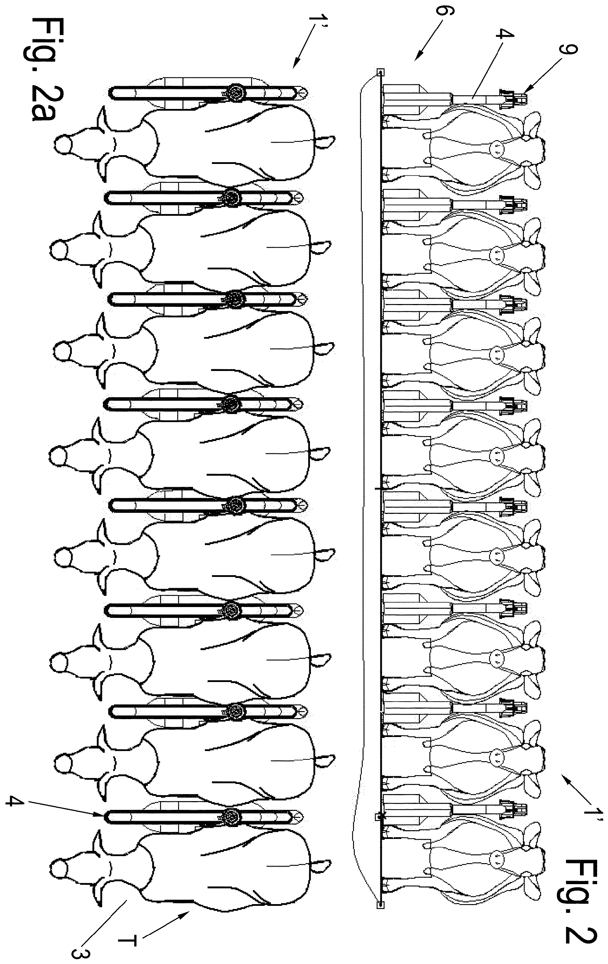

In Figur 2 und 2a sind schematische Ansichten eines zweiten Ausführungsbeispiels der erfindungsgemäßen Melkstandanordnung 1' mit den erfindungsgemäßen Platzteilern 4 dargestellt. Figur 2 zeigt eine Vorderansicht und Figur 2a stellt eine Draufsicht dar. Hier sind die Melkstände 3 nebeneinander angeordnet und auch durch Platzteiler 4 getrennt. In den Melkständen 3 befinden sich zu melkende Tiere T, welche hier Kühe sind. Auf jedem Platzteiler 4 ist eine Antriebseinheit 9 für jeweils eine Armeinrichtung 6 mit dem Melkzeug 5 angeordnet.

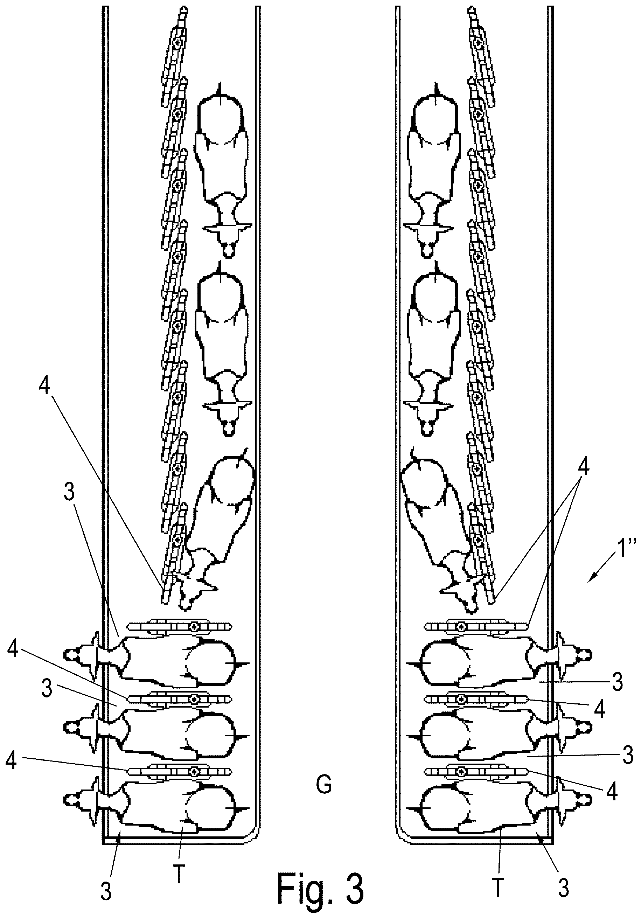

Figur 3 zeigt eine schematische Draufsicht eines dritten Ausführungsbeispiels der erfindungsgemäßen Melkstandanordnung 1" mit den erfindungsgemäßen Platzteilern 4. In diesem dritten Ausführungsbeispiel sind die Platzteiler 4 in einem U-förmigen Laufgang verschwenkbar angeordnet, wobei sie zunächst einen Gang bilden, indem sie in einer Linie verschwenkt sind und die Tiere T leiten. Sobald das erste Tier am Ende des U-förmigen Laufgangs angekommen ist, verschwenkt der erste links in der Figur 3 stehende Platzteiler so gegen den Uhrzeigersinn, dass ein Melkstand 3 gebildet wird. Das Verschwenken kann entweder gesteuert über einen Drehaktuator oder automatisch durch die Bewegung des Tieres T erfolgen. Diese Vorgänge laufen ab, bis alle Tiere in der Melkstandanordnung 1" platziert sind. Auch hier ist auf jedem Platzteiler 4 eine Antriebseinheit 9 für jeweils eine Armeinrichtung 6 mit dem Melkzeug 5 angeordnet. Auch ein Andocken (was weiter unten noch im Detail erläutert wird) von Antriebseinheiten 9', die über eine oben oder unten liegende Schiene verfahren werden, ist hier möglich.

Es sind hier zwei U-förmige Laufgänge spiegelbildlich angeordnet, welche durch eine so genannte Grube G getrennt sind. Die Grube G ist der Aufenthaltsbereich eines Melkers, der von hier beidseitig das Melkgeschehen überwachen und helfend eingreifen kann, ohne durch die Bewegung der Armeinrichtungen 6 behindert zu werden.

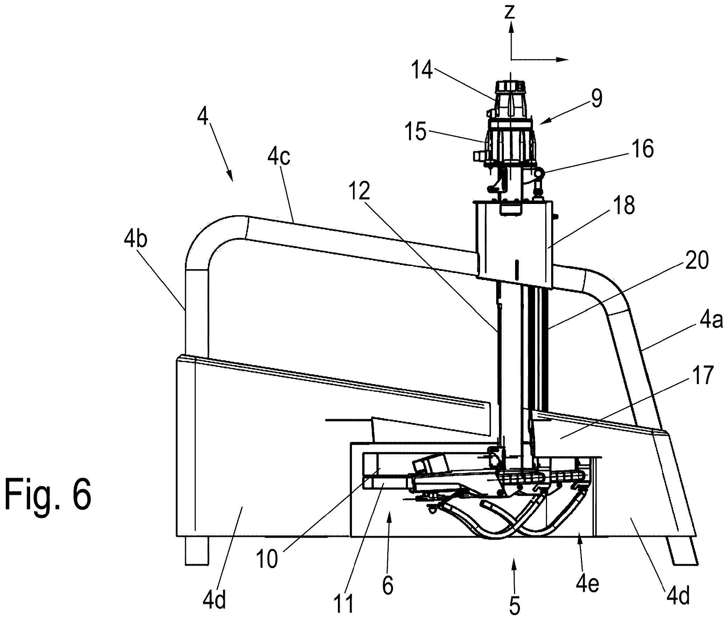

Figur 4 stellt eine schematische Perspektivansicht des erfindungsgemäßen Platzteilers 4 mit der Armeinrichtung 6 in der Parkposition dar. Figur 5 zeigt eine schematische Perspektivansicht des erfindungsgemäßen Platzteilers 4 mit der Armeinrichtung 6 in einer Arbeitsposition. Figur 6 stellt eine Seitenansicht dar.

Der Platzteiler 4 ist hier als ein Gehäuse ausgebildet, in welchem die gesamte Aktorik für die Armeinrichtung 6 und das Melkzeug 5, sowie Steuerelemente und Antriebseinheiten angeordnet sind. Der Platzteiler 4 ist so eine komplette Einheit, die an gegebener Stelle vormontierbar und komplett austauschbar oder nachrüstbar ist.

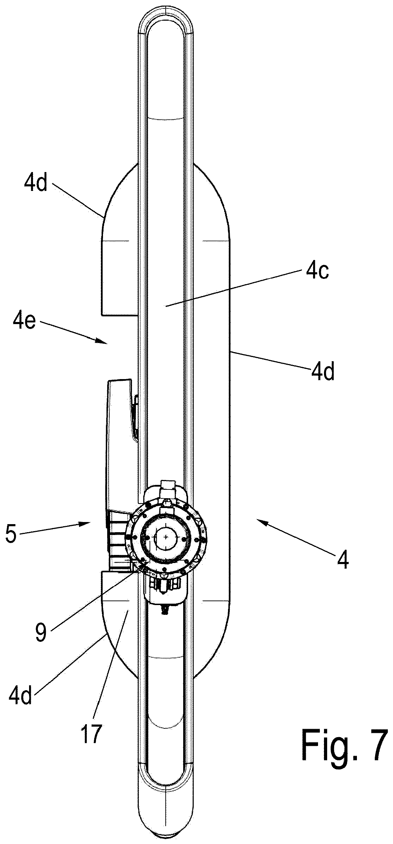

Der Platzteiler 4 ist hier als eine Rohrkonstruktion mit einem vorderen Pfosten 4a, der leicht geneigt ist, und einem hinteren Pfosten 4b. Die Pfosten 4a, 4b sind über eine horizontal verlaufende Horizontalstange 4c verbunden. Etwa ab halber Höhe sind die Pfosten 4a, 4b von einer Verkleidung 4d umhüllt, die sich etwa bis zu den Füßen der Pfosten 4a, 4b erstreckt. Die Pfosten 4a, 4b und die Horizontalstange 4c können auch einstückig aus gebogenem Rohr hergestellt sein. In der Verkleidung 4d ist in der vorderen Hälfte eine Öffnung 4e eingebracht, wodurch sich eine Aufnahme innerhalb des Platzteilers 4 in der Verkleidung 4d ergibt, die auch zu den Seiten hin so ausgebaucht sein kann (siehe z.B. Fig. 7), dass sie das in ihr geparkte Melkzeug 5 aufnimmt und umgibt. Auf der Seite der Öffnung 4e kann eine zusätzliche, nicht gezeigte Schutzabdeckung zum Schutz des Melkzeugs 5 angebracht sein. Diese Schutzabdeckung kann bei Aktivierung des Melkzeugs 5 z.B. in Richtung des Platzteilers 4 verschoben werden, um die Öffnung 4e freizugeben. In einer weiteren Ausführung kann die Schutzabdeckung auch am Melkzeug 5 angebracht sein. So verbleibt die Schutzabdeckung fest am Melkzeug 5 und verfährt auch mit diesem. Sie kann auch in der Arbeitsposition verkleinert werden, z.B. durch automatisches Zusammenklappen oder -schieben.

Das Melkzeug 5 ist an dem Unterarm 11 der Armeinrichtung 6 angebracht. Das Melkzeug 5 weist in diesem Ausführungsbeispiel vier Zitzenbecher 5a auf. Jeder der vier Zitzenbecher 5a kann unabhängig von den anderen eine unterschiedliche Stellung einnehmen und automatisch fixiert oder frei beweglich geschaltet werden. Somit können die Zitzenbecher 5a im angesetzten Zustand individuelle Positionen einnehmen, da die Zitzenbecher 5a einzeln angesetzt werden. Außerdem ist eine nicht dargestellte individuelle Zitzenbechervorpositionierung denkbar, mit der dann mehrere Zitzenbecher gleichzeitig ansetzbar sind.

Das Melkzeug 5 ist außerdem mit einem Positionssensor 13 versehen, welcher hier als ein dreidimensionaler optischer Sensor ausgebildet ist. Mit dem Positionssensor 13 wird das Melkzeug 5 mittels der Armeinrichtung 6 und einer Antriebseinheit 9 aus der Parkposition in die Arbeitsposition nach Figur 5 verstellt.

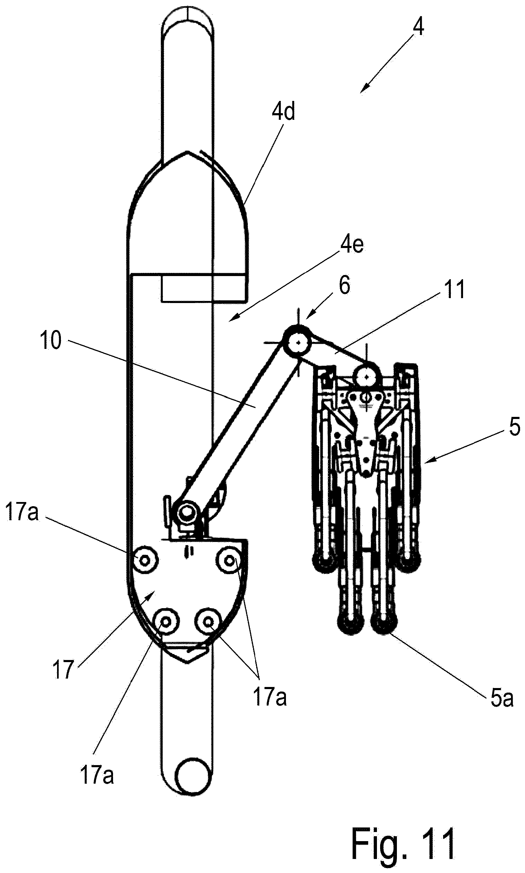

Die Armeinrichtung 6 ist zusammen mit dem Melkzeug 5 scherenförmig zusammenklappbar, wodurch die Breite des Melkzeugs 5 im unteren eingeklappten Bereich in der Parkposition, wenn das Melkzeug 5 z.B. in einer so genannten Clean(ing)-in-Place- (CIP-) Position (siehe dazu Figur 11) steht, nicht wesentlich überschritten wird.

In der Arbeitsposition kann das Melkzeug 5 verschiedene Stellungen einnehmen. Eine Ansetzstellung dient z.B. dazu, die Zitzenbecher 5a so zu positionieren, dass sie jeweils an eine entsprechende Zitze eines zu melkenden Tieres angehängt werden können. Während des Melkvorgangs unterstützt die Armeinrichtung 6 das Melkzeug 5 derart, dass das Gewicht des Melkzeugs den Melkvorgang nicht beeinträchtigt. Nach einer vollendeten Melkung werden die Zitzenbecher 5a wieder vom Euter des gemolkenen Tieres gelöst.

Eine Steuerung der Bewegungsvorgänge der Armeinrichtung 6 und des Melkzeugs 5 erfolgt mittels einer Steuereinrichtung, die hier nicht gezeigt ist. Die Steuereinrichtung ist mit dem Positionssensor 13 und der Antriebseinheit 9 verbunden. In diesem Ausführungsbeispiel ist die Antriebseinheit 9 auf einem oberen Ende einer Oberarmantriebswelle 12 angebracht. Die Oberarmantriebswelle 12 und mit ihr die Antriebseinheit 9 und die Armeinrichtung 6 mit dem Melkzeug 5 sind in einer Führungseinheit 18 auf der Horizontalstange 4c des Platzteilers 4 befestigt und rotatorisch wie auch vertikal verstellbar geführt. Die Oberarmantriebswelle 12 ist mit ihrem unteren Ende mit einem Ende des Oberarms 10 der Armeinrichtung 6 fest verbunden. An ihrem oberen Ende ist die Oberarmwelle 12 mit einem Antrieb der Antriebseinheit 9 gekoppelt. In der als Hohlwelle ausgebildeten Oberarmwelle 12 ist eine weitere Welle zum Antrieb des Unterarms 11 angeordnet, die von einem weiteren Antrieb der Antriebseinheit 9 antreibbar ist. Die Oberarmantriebswelle 12 und die mit ihr verbundene Armeinrichtung 6 mit Melkzeug 5 sind durch einen Vertikalantrieb 20 (siehe Figur 6), z.B. ein Pneumatikzylinder, vertikal verstellbar. Der Vertikalantrieb 20 ist an einem unteren Ende mit dem Platzteiler 4 verbunden und mit einem oberen Ende über eine Anlenkung 16 im Bereich des oberen Endes der Oberarmwelle 12 an einer nicht näher beschriebenen Halterung der Antriebseinheit 9 angelenkt.

Die Antriebe der Antriebseinheit 9 können in unterschiedlicher Ausführung realisiert sein, wie beispielsweise Servomotoren mit entsprechenden Getrieben, aber auch Direktantriebsmotoren sind möglich. Außerdem sind sie z.B. als so genannte Torque-Motoren ausgebildet, wodurch eine gewisse Elastizität der Armeinrichtung 6 und des Melkzeugs 5 erreicht wird. Beispielsweise können Tritte des zu melkenden Tieres abgefedert werden.

Sowohl der Oberarm 10 als auch der Unterarm 11 sind auf diese Weise unabhängig voneinander gezielt antreibbar.

Die Antriebseinheit 9 ist hier im oberen Bereich des Platzteilers 4 oberhalb eines zu melkenden Tieres außerhalb dessen Reichweite angeordnet. Das hat einerseits den Vorteil, dass die Antriebseinheit 9 im nicht trittgefährdeten Bereich liegt. Außerdem ist der obere Bereich über dem Tier besser vor Feuchtigkeit und den damit verbundenen Schäden geschützt. Weiterhin ist auch damit die besonders schmale Bauform des Platzteilers 4 möglich. Die Armeinrichtung 6 mit dem Melkzeug 5 ist im unteren Bereich des Platzteilers 4 so angeordnet, dass ein notwendiges Verschwenken der Armeinrichtung 6 mit dem Melkzeug 5 unterhalb des Bauches eines zu melkenden Tieres von der Seite her stattfinden kann. Dabei können auch die Beine des zu melkenden Tieres nicht getroffen werden.

In der Parkposition des Melkzeugs 5 und der Armeinrichtung 6 innerhalb der Verkleidung 4d des Platzteilers 4 kann das Melkzeug 5 unter eine Reinigungseinrichtung 17 bewegt werden, welche unten noch näher beschrieben wird.

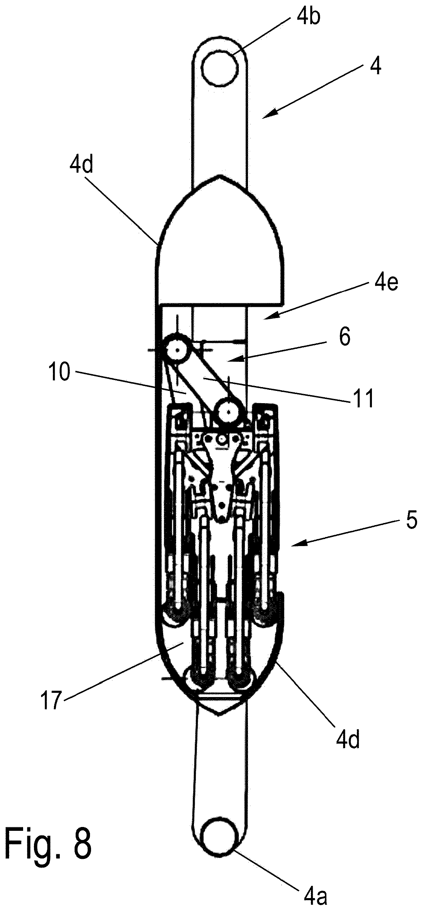

In der Figur 7 ist der erfindungsgemäße Platzteiler 4 mit der Armeinrichtung 6 in Parkposition in einer Draufsicht dargestellt. Es ist deutlich zu erkennen, dass die Verkleidung beidseitig einer Mittellängsachse des Platzteilers 4 ausgebaucht ist und Armeinrichtung 6 mit Melkzeug 5 vollständig aufnimmt. Figur 8 zeigt dazu eine Unteransicht.

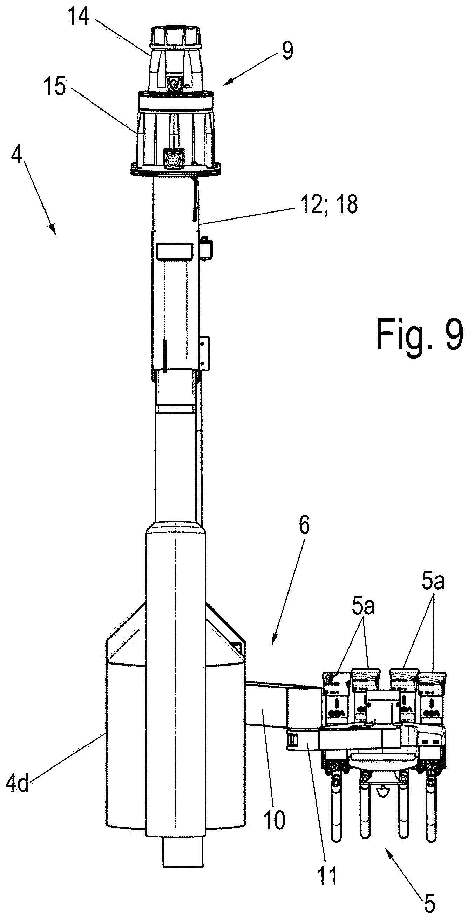

In Figur 9 ist der erfindungsgemäße Platzteiler 4 in einer Rückansicht mit Melkzeug 5 in Arbeitsposition gezeigt. Die Verkleidung 4d des Platzteilers 4 ist im unteren Bereich, d.h. unterhalb eines Bauches eines seitlich davon stehenden zu melkenden Tieres ausgebaucht, so dass ein minimaler Bauraum eingenommen wird. Auf diese Weise können die Tiere T genau so nah nebeneinander stehen, als wenn kein Platzteiler 4 mit integrierter Armeinrichtung 6 und Melkzeug 5 vorhanden wäre. Die Antriebseinheit 9 ist hier mit zwei Motoren gezeigt, wobei der obere als Unterarmantrieb 14 mit dem Unterarm 11 verbunden ist. Der untere Antrieb ist ein Oberarmantrieb 15 zum Antrieb des Oberarms 10.

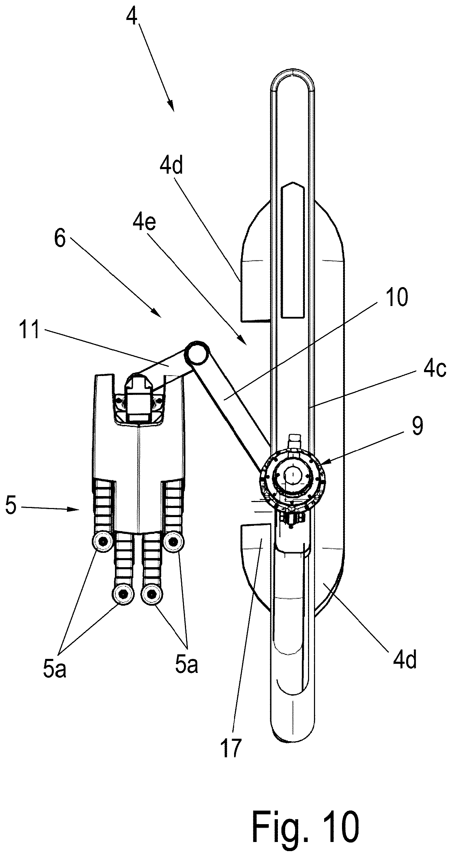

Figur 10 illustriert eine Draufsicht des Platzteilers 4 mit der Armeinrichtung 6 und dem Melkzeug 5 in Arbeitsposition. Das Melkzeug 5 verläuft annähernd parallel zum Platzteiler 4. Eine Parallelführung der Armeinrichtung 6 wird weiter unten noch ausführlich erläutert.

In Figur 11 ist in einer Unteransicht des Platzteilers 4 die Reinigungseinrichtung 17 mit Reinigungsdüsen 17a dargestellt. Wenn das Melkzeug 5 die Parkposition einnimmt, ist diese Position gleichzeitig die so genannte Clean(ing)-in-Place- (CIP-) Position. Dabei fährt der Vertikalantrieb 20 die Armeinrichtung 6 mit dem Melkzeug 5 in Vertikalrichtung z nach oben, bis die Reinigungsdüsen 17a jeweils mit einem Zitzenbecher 5a des Melkzeugs 5 zusammenwirken, um diese mit einer Reinigungsflüssigkeit zu reinigen. Die Reinigungsdüsen 17 a können auch mit Luft beschickt werden, um eine Trocknung der Zitzenbecher nach Reinigung zu bewirken. Es ist auch möglich, dass der Vertikalantrieb 20 das Melkzeug 5 und somit die Zitzenbecher 5a in Vertikalrichtung um ein bestimmtes Maß auf und ab bewegt, wobei die Reinigungsdüsen 17a innerhalb der Zitzenbecher 5a z.B. reinigen können. Die Reinigungsdüsen 17a können dazu entsprechend ausgebildet sein, z.B. als Kegelstrahldüsen oder/und Radialstrahldüsen. Zusätzlich zu den Reinigungsdüsen 17a können in besonderer Ausgestaltung außerdem hier nicht dargestellte Außenreinigungsdüsen die Zitzenbecher 5a außen reinigen. Zusätzlich kann auch eine Desinfektion erfolgen.

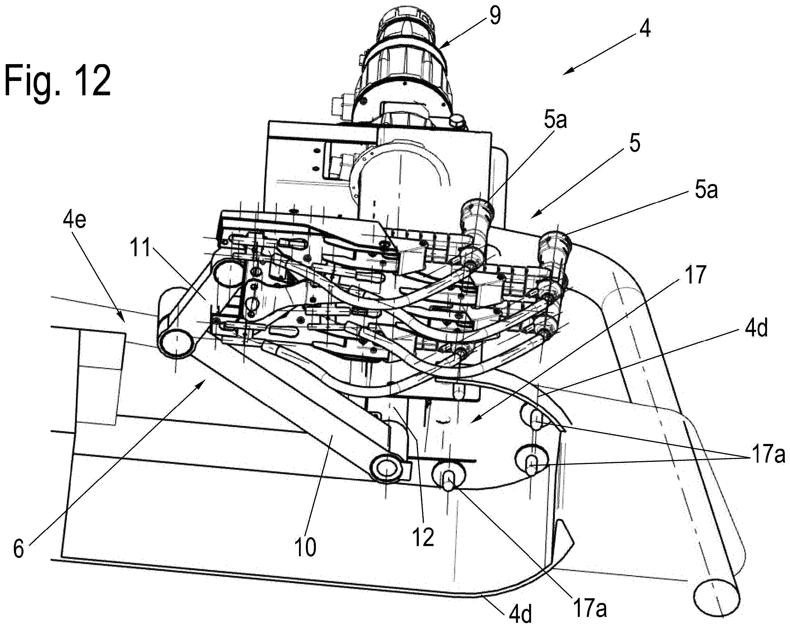

Figur 12 stellt eine perspektivische Teilansicht des erfindungsgemäßen Platzteilers 4 mit der Armeinrichtung 6 in Arbeitsposition von unten gesehen dar, wobei die Reinigungseinrichtung 17 mit den Reinigungsdüsen 17a unter der Verkleidung 4d gut zu erkennen ist.

Ein Melkstart wird ausgeführt, indem die Steuereinrichtung festgestellt hat, dass das zu melkende Tier in Melkposition steht. Dies kann z.B. durch Kamera oder Fußsensoren, Annäherungssensoren und dgl. festgestellt werden. Das Melken beginnt mit dem Ansetzvorgang in der Arbeitsposition des Melkzeugs 5. Eine Grobpositionierung in der Höhe kann durch einen Pneumatikzylinder als Vertikalantrieb 20 erfolgen. Dann erfolgt ein relatives Ansetzen der Zitzenbecher an die Zitzen des Euters des zu melkenden Tieres, wobei eine Positionierung mit dem Positionssensor 13 vorgenommen wird, indem die Armeinrichtung 6 eine Feinpositionierung des Melkzeugs 5 vornimmt.

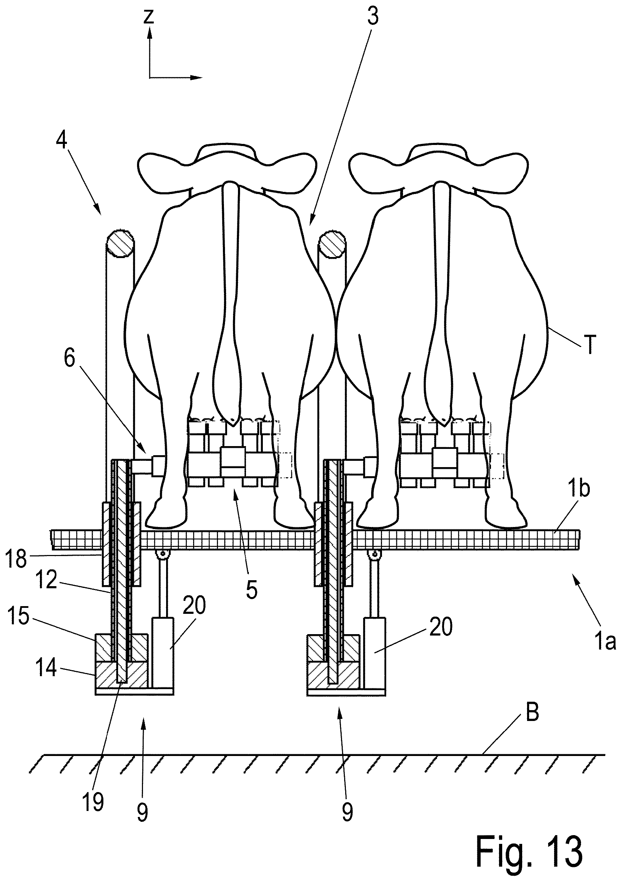

In Figur 13 ist eine erste Variation des erfindungsgemäßen Platzteilers 4 mit der Armeinrichtung 6 in Arbeitsposition dargestellt. Diese Variation kann z.B. bei einem Karussellmelkstand wie in Figur 1 gezeigt zur Anwendung kommen, aber ist nicht darauf beschränkt. Die Antriebseinheit 9 befindet sich unterhalb einer Melkplattform 1b des Melkstands 1 an einer Unterseite 1a oberhalb eines Bodens B. Die Führungseinheit 18 für die Oberarmantriebswelle 12 ist unter dem Platzteiler 4 in die Melkplattform 1b eingesetzt und befestigt. Die Führungseinheit 18 dient auch hier zur rotatorischen und vertikalen Längsführung der Oberarmantriebswelle 12 und somit des daran angebrachten Melkzeugs 5 mit der Armeinrichtung 6. In Figur 13 ist schematisch dargestellt, dass der Unterarmantrieb 14 der Antriebseinheit 9 auf einer Montageplatte angebracht und mit einer Unterarmantriebswelle 19 verbunden ist, die sich durch die als Hohlwelle ausgebildete Oberarmantriebswelle 12 hindurch erstreckt. Der Oberarmantrieb 15 ist am unteren Ende der Oberarmantriebswelle 12 angeordnet und mit dieser gekoppelt. Auf der Montageplatte ist außerdem der Vertikalantrieb 20 mit einem Ende angelenkt, wobei sein anderes Ende mit der Melkplattform 1b verbunden ist. Da die Antriebseinheit 9 unterhalb der Melkplattform 1b über dem Boden B angeordnet ist, ist sie für Wartungs- und Reparaturzwecke leicht zugänglich, aber von einem Tier T im Melkstand 3 nicht erreichbar.

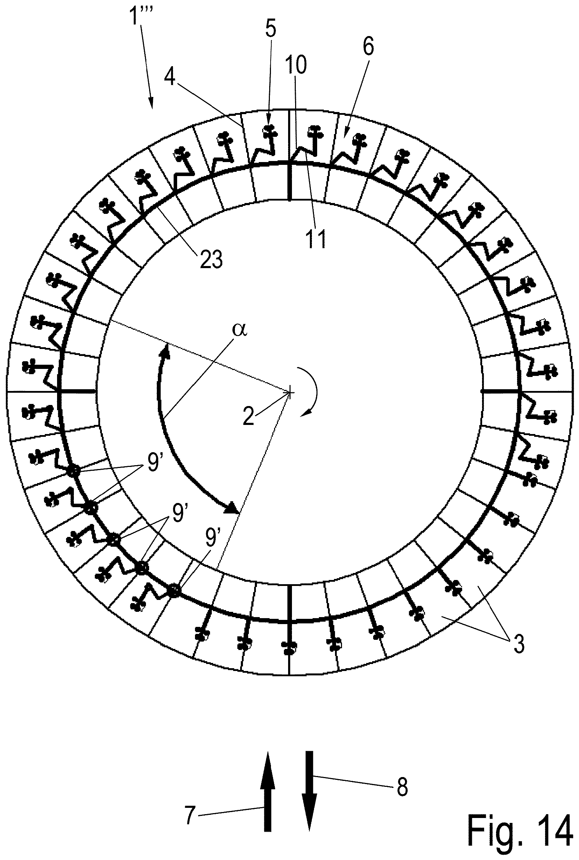

Figur 14 zeigt eine schematische Draufsicht auf eine Variation des ersten Ausführungsbeispiels der erfindungsgemäßen Melkstandanordnung 1‴ mit den erfindungsgemäßen Platzteilern 4 in einer zweiten Variation.

Im Unterschied zu Figur 1 weist jeder Platzteiler 4 die Armeinrichtung 6 mit Melkzeug 5 aber ohne Antriebseinheit 9 auf. Es sind z.B. fünf Antriebseinheiten 9' vorgesehen, welche an einer Schiene 23 verfahrbar angeordnet sind. Die Schiene 23 ist fest mit der Melkstandanordnung 1 verbunden. Dadurch ist ein synchrones Bewegen von Melkkarussell und der Antriebseinheit 9' möglich. Jede Antriebseinheit 9' ist zum Andocken an die Antriebswellen der Armeinrichtung 6 eines jeden Platzteilers 4 vorgesehen. Ein Andockvorgang findet bevorzugt nur im Ansetzbereich α der Melkstandanordnung 1‴ statt. Dies wird unten noch weiter erläutert. Es ist aber auch möglich, dass eine oder mehrere Antriebseinheiten 9' außerhalb des Ansetzbereiches α verfahren, um z.B. abgeschlagene Melkzeuge 5 wieder anzusetzen. Die Antriebseinheiten 9' vollziehen die gleiche Bewegung der Melkstandanordnung 1‴ innerhalb des Kreisausschnitts des Ansetzbereichs α mit. Dabei betätigen sie jeweils die Armeinrichtung 6 mit dem Melkzeug 5 der ihnen durch Andocken zugeordneten Platzteiler 4.

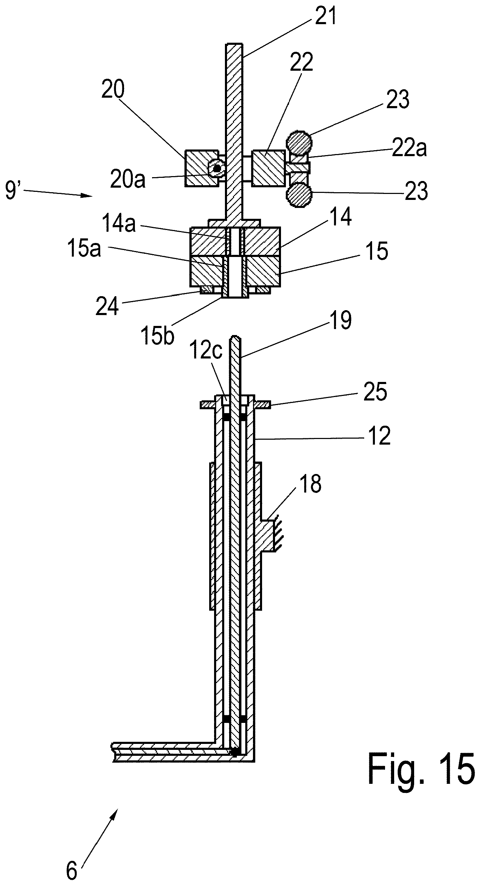

Die Figuren 15-18 zeigen Schnittdarstellungen eines Antriebsabschnitts der Armeinrichtung 6 der zweiten Variation des erfindungsgemäßen Platzteilers 4 in unterschiedlichen Betriebsstellungen.

Figur 15 zeigt eine Betriebsstellung vor dem Andocken der Antriebseinheit 9'. Die Antriebseinheit 9' umfasst einen Halter 21, an dessen unterem Ende der Unterarmantrieb 14 und der Oberarmantrieb 15 angebracht sind. Der Halter 21 ist z.B. eine Stange, die in einem nur schematisch gezeigten Vertikalantrieb 20 mittels eines Vertikalantriebsrads 20a in Vertikalrichtung verstellbar ist. Dies kann z.B. mittels einer Zahnstange erfolgen. Der Vertikalantrieb 20 ist mit einem Fahrantrieb 22 verbunden, welcher ein Fahrantriebsrad 22a antreibt. Das Fahrantriebsrad 22a ist an die Schiene 23 angepasst und läuft zwischen zwei übereinander angeordneten Schienen 23. Mittels des Verfahrantriebs 22 ist die Antriebseinheit 9' an den Schienen 23 verfahrbar und wird zum Andocken an die Armeinrichtung 6 über diese gefahren und so ausgerichtet, dass die Längsachsen der Antriebseinheit 9' und der Antriebswellen der Armeinrichtung 6 fluchten.

Unterhalb des Oberarmantriebs 15 ist eine Kupplungseinheit 24, z.B. eine Elektromagnetkupplung, angeordnet, welche zur Zusammenwirkung mit einem Kupplungselement 25 bestimmt ist, das auf dem oberen Ende der Oberarmantriebswelle 12 angebracht ist. Die Oberarmantriebswelle 12 und die in ihr angeordnete Unterarmantriebswelle 19 sind in der Führungseinheit 18 rotatorisch und vertikal verstellbar geführt. Das obere Ende der Unterarmantriebswelle 19 steht um ein bestimmtes Maß aus dem oberen Ende der Oberarmantriebswelle 12 hervor.

Das obere Ende der Unterarmantriebswelle 19 weist einen Außenquerschnitt auf, welcher mit dem Innenquerschnitt einer Unterarmwellenkopplung 14a des Unterarmantriebs 14 korrespondiert, um ein Drehmoment zu übertragen. In ähnlicher Weise ist das obere Ende der Oberarmantriebswelle 12 mit einem Innenkupplungsabschnitt 12c mit einem Innenquerschnitt versehen, welcher mit dem Außenquerschnitt eines hervorstehenden Außenkupplungsabschnitts 15b einer Oberarmwellenkopplung 15a des Oberarmantriebs 15 korrespondiert.

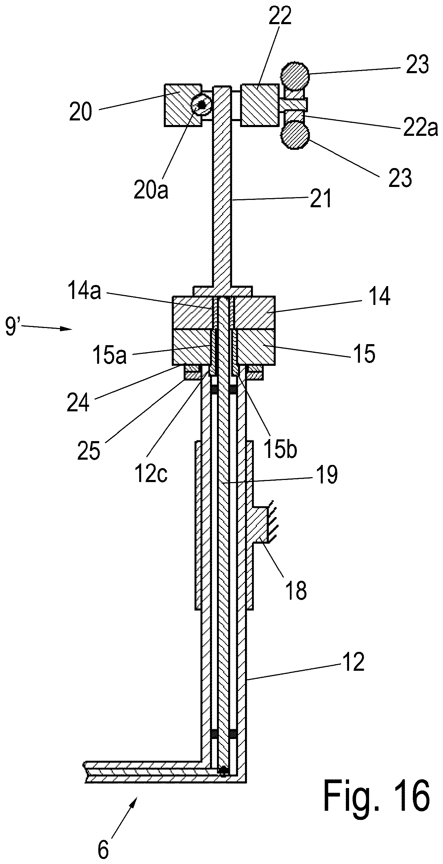

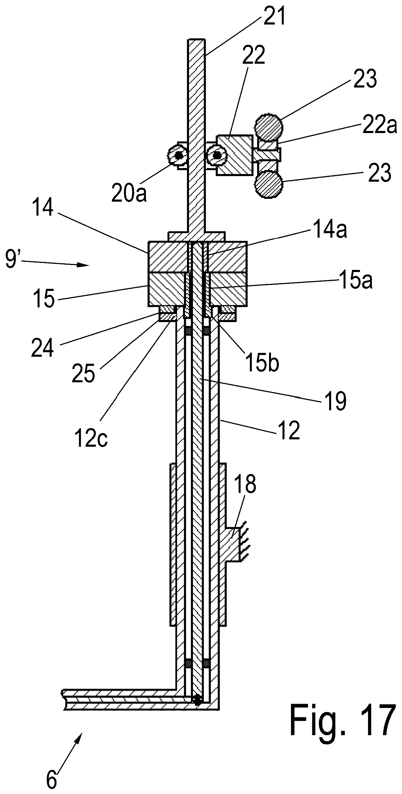

Beim Andocken verstellt der Vertikalantrieb 20 die Antriebseinheit 9' mittels des Halters 21 vertikal nach unten. Figur 16 zeigt die Betriebsstellung "angedockt". Dabei wirkt die Kupplungseinheit 24 mit dem Kupplungselement 25 zusammen und stellt dadurch eine Verbindung zwischen Antriebseinheit 9' und Armeinrichtung 6 her. Das obere Ende der Unterarmantriebswelle 19 ist in der Unterarmwellenkopplung 14a des Unterarmantriebs 14 eingeführt und formschlüssig damit verbunden. In den Innenkupplungsabschnitt 12c des oberen Endes der Oberarmantriebswelle 12 ist der hervorstehende Außenkupplungsabschnitt 15b des unteren Endes der Oberarmwellenkopplung 15a des Oberarmantriebs 15 eingeführt und damit formschlüssig verbunden. Nun kann die Antriebseinheit 9' die Armeinrichtung 6 mit den Wellenantriebsmotoren 14 und 15 antreiben, wobei der Vertikalantrieb 20 über den Halter 21 und die Kupplungseinheit 24 die Armeinrichtung 6 mit dem Melkzeug 5 in vertikaler Richtung verstellen kann. Dies zeigt Figur 17 in einer Betriebsstellung "Ansetzen". Gleichzeitig können die Arme 10 und 11 natürlich auch eigene, unabhängige Bewegungen durch die Antriebseinheit 9' durchführen.

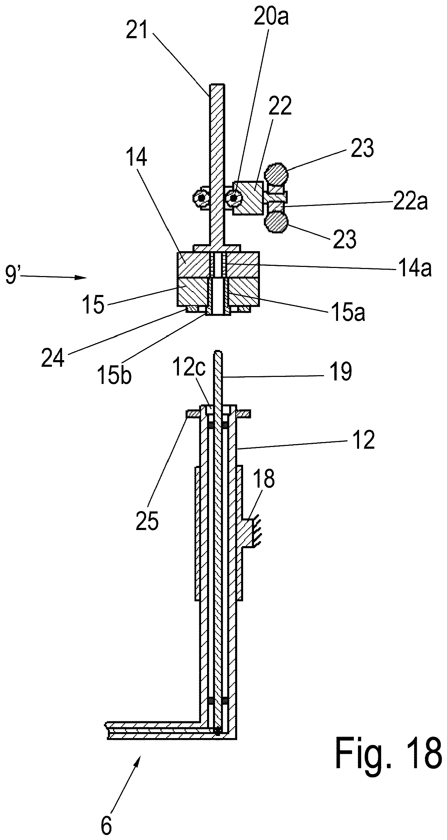

Nach erfolgtem Ansetzen des Melkzeugs 5 mit der Armeinrichtung 6 kann die Antriebseinheit 9' wieder entfernt werden, was Figur 18 zeigt. Dies erfolgt durch Lösen der Kupplungseinheit 24 und Verfahren des Halters 21 mittels Vertikalantrieb 20 nach oben.

Ein Zurückfahren der Armeinrichtungen 6 in die jeweilige Parkposition nach vollendetem Melkvorgang erfolgt ebenfalls durch die andockbaren Antriebseinheiten 9', wobei diese auf der Schiene 23 dann in den entsprechenden Bereich der Melkstandanordnung 1‴ gefahren werden. Dies kann durch die gleichen Antriebseinheiten 9' oder durch zusätzliche ausgeführt werden.

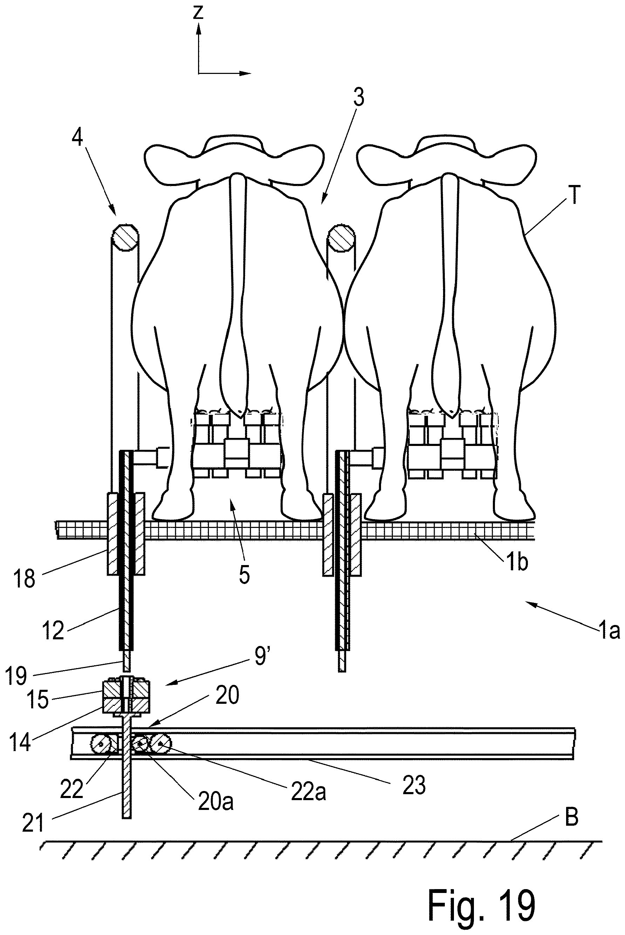

Figur 19 zeigt eine dritte Variation des erfindungsgemäßen Platzteilers 4 mit der Armeinrichtung 6 in Arbeitsposition ähnlich zu der Figur 13. Hierbei ist die Schiene 23 unter der Melkplattform 1b über dem Boden B angeordnet und die Antriebseinheiten 9' sind wie oben beschrieben nun von unten an die jeweiligen Armeinrichtungen 6 andockbar.

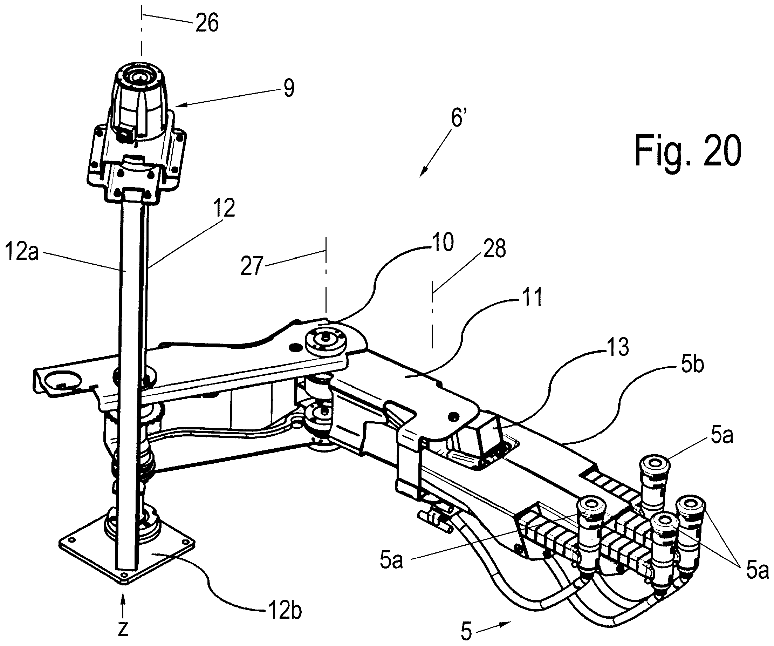

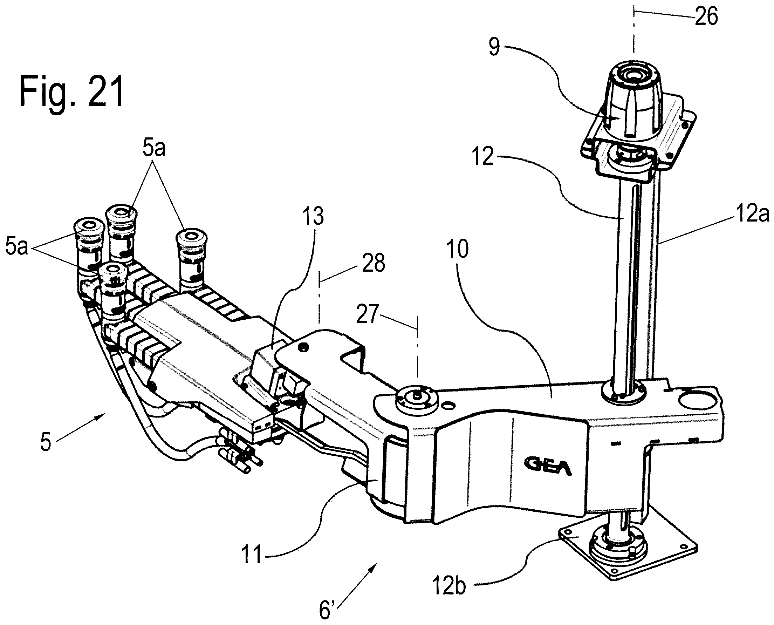

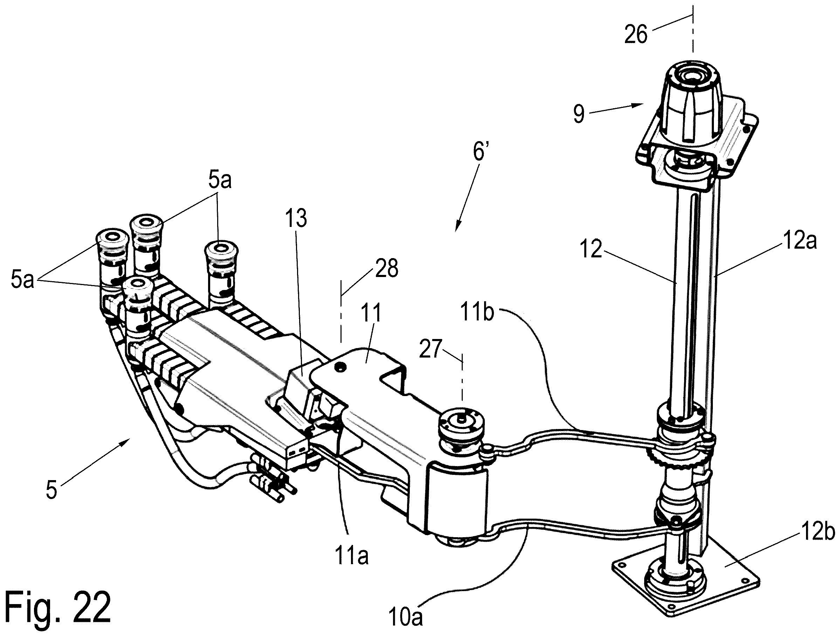

Die Figuren 20-22 zeigen perspektivische Darstellungen einer ersten Variation der Armeinrichtung 6' des erfindungsgemäßen Platzteilers 4 in unterschiedlichen Ansichten.

Die Antriebseinheit 9 ist über einen Ständer 12a mit einer Befestigungsplatte 12b am Platzteiler 4 oder auf einer Melkplattform 1b befestigt.

Mit dem Unterarmantrieb 14 und dem Oberarmantrieb 15 der Antriebseinheit 9 wird das Melkzeug 5 aus der Parkposition im (hier nicht dargestellten) Platzteiler 4 seitlich unter das zu melkende Tier in die Arbeits- und Ansetzposition bewegt. Der Oberarmantrieb 15 bewegt den Oberarm 10 direkt. Oberarmantrieb 15, Oberarmantriebswelle 12 und Oberarm 10 sind eine Einheit. Durch den Unterarmantrieb 14 wird der Unterarm 11 über eine Schubstange Unterarm 10a bewegt und positioniert.

Die Antriebseinheit 9 liegt in einer Vertikalachse 26. Oberarm 10 und Unterarm 11 sind in einer vertikalen Zwischenachse 27 verschwenkbar verbunden. Das Melkzeug 5 ist mit einem Melkzeugträger 5b an dem Unterarm 11 in einer Halterachse 28 verschwenkbar befestigt.

Eine Parallelführung des Melkzeugs 5 wird durch eine feste Verbindung mit zwischenliegenden Gelenken zwischen Melkzeug 5 und Unterarm 11 und ortsfester Befestigungsplatte 12b mit Schubstangen Parallelführung 10b und 11a realisiert. Die Parallelität kann über eine Justierung an der ortsfesten Befestigungsplatte 12b variiert werden.

Die vertikale Bewegung der Armeinrichtung 6' längs der Vertikalachse 26 wird mit einem Vertikalantrieb vorgenommen, der hier nicht gezeigt ist. Dabei wird der Oberarm an der Oberarmantriebswelle 12 linear verfahren, wobei die Oberarmantriebswelle 12 drehfest mit dem Oberarm 10 verbunden ist, aber eine Linearführung für diesen bildet.

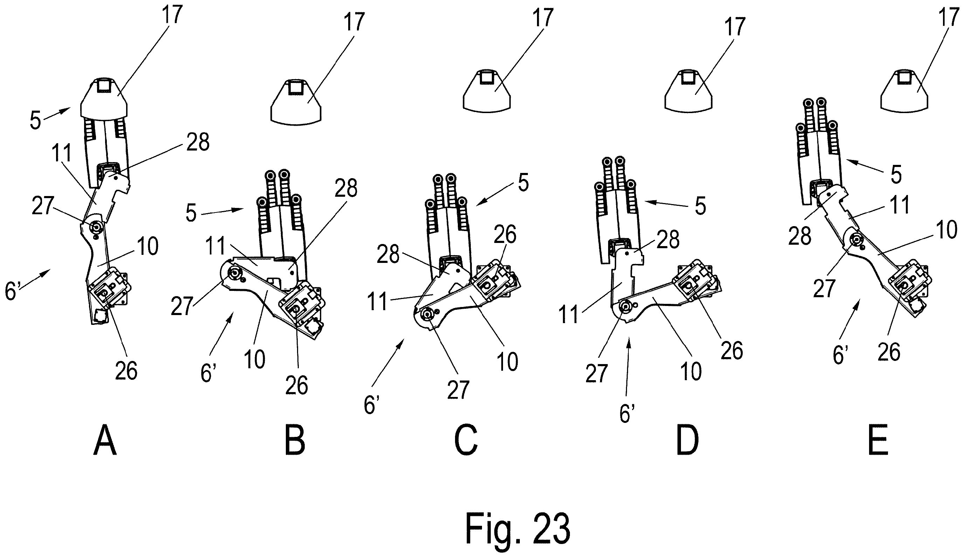

Figur 23 zeigt schematische Darstellungen eines Bewegungsablaufs der Armeinrichtung 6' nach den Figuren 20 bis 22.

In der Position A befindet sich das Melkzeug 5 in der Parkposition unter der Reinigungseinrichtung 17 und wird gereinigt. Zum Start des Melkens wird das Melkzeug 5 zunächst vertikal nach unten verstellt. Dann verschwenkt der Oberarm 10 um die Vertikalachse 26 gegen den Uhrzeigersinn und zieht dabei das Melkzeug 5, das immer in der gleichen Relativstellung zur Längsachse des Platzteilers 4 (hier nicht gezeigt, aber leicht vorstellbar) durch die Parallelführung bleibt. Dies zeigt Position B.

Der Oberarm 10 verschwenkt weiter gegen den Uhrzeigersinn und erreicht die Position C, wobei das Melkzeug 5 von der Längsachse des Platzteilers 4 be-abstandet wird.

In Position D wird der Unterarm 11 gegen den Uhrzeigersinn verschwenkt und der Abstand zwischen Melkzeug 5 und Längsachse des Platzteilers 4 vergrößert sich.

Schließlich wird der Oberarm 10 im Uhrzeigersinn verschwenkt, wobei der Unterarm 11 im Gegenuhrzeigersinn verschwenkt und die Arbeits- bzw. Ansetzposition in Position E erreicht. Zum Ansetzen erfolgt eine weitere Vertikalverstellung der Armeinrichtung 6' nach oben, wobei diese Verstellung je nach Tier voreinstellbar sein kann.

Das Melkzeug 5 wird aus der Parkposition in die Arbeitsposition somit in einer U-förmigen Bewegung verschwenkt.

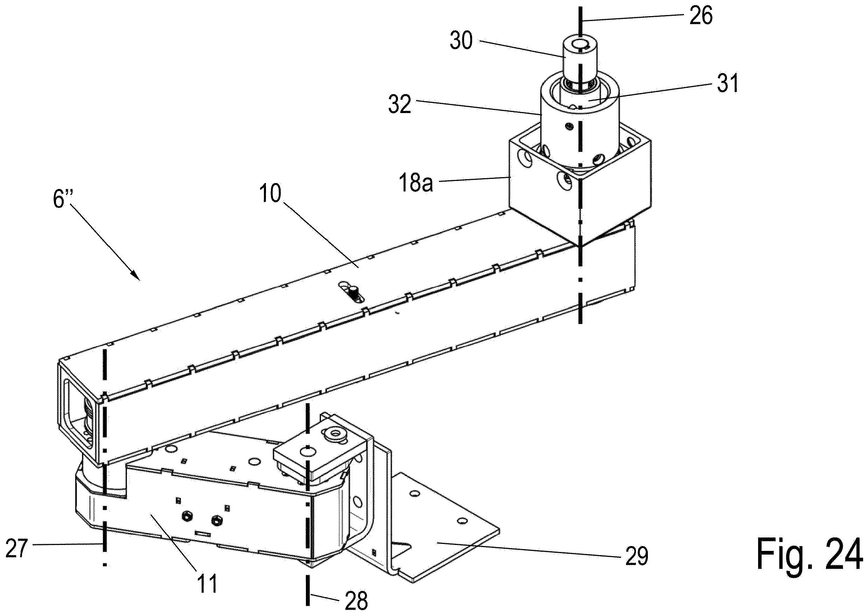

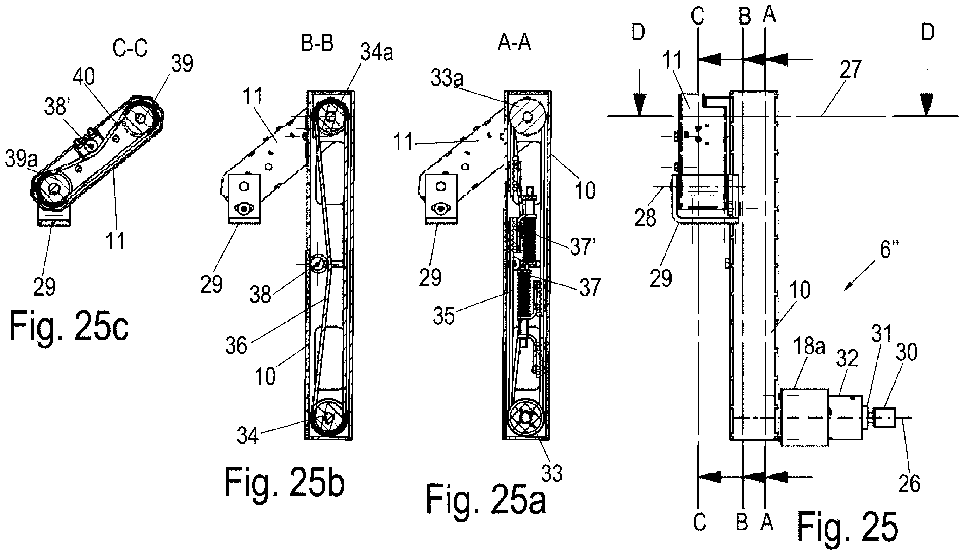

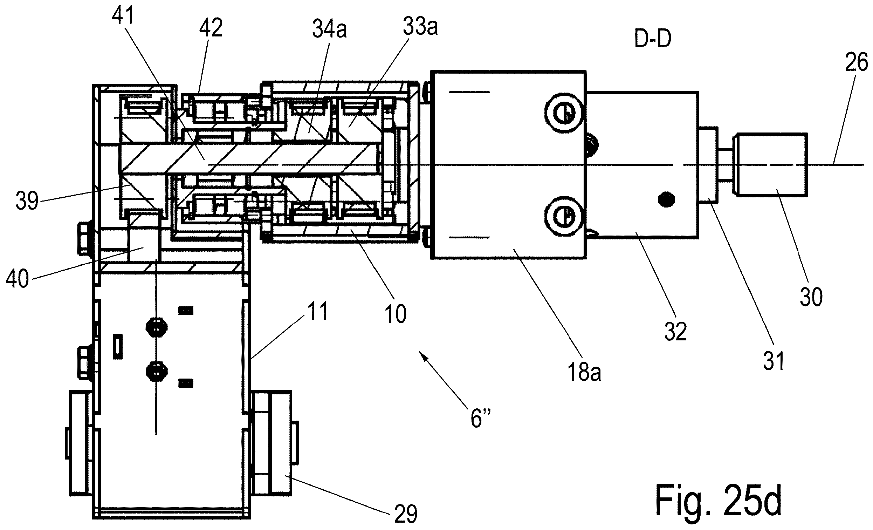

In Figur 24 ist eine perspektivische Darstellung einer zweiten Variation der Armeinrichtung 6" des erfindungsgemäßen Platzteilers 4 gezeigt. Figuren 25 bis 25d zeigen unterschiedliche Darstellungen in unterschiedlichen Ansichten und Schnitten der zweiten Variation der Armeinrichtung 6" nach Figur 24.

Eine Führungseinheit 18a ist hier als Vierkantrohr ausgebildet und dient zu einer rotationsfesten ortsfesten Anbringung der Armeinrichtung 6", z.B. am Platzteiler 4.

Innerhalb der Führungseinheit 18a sind fluchtend mit der Vertikalachse 26 eine Unterarmantriebswelle 30, eine Parallelführungsreferenz 31 als erste Hohlwelle und eine Oberarmantriebshohlwelle 32 angeordnet.

Der Oberarm 10 und der Unterarm 11 sind hier z.B. als Hohlprofile ausgestaltet. Sie können natürlich auch anders ausgebildet sein. An dem freien Ende des Unterarms 11 ist ein um die Halterachse 28 verschwenkbarer Halter 29 in Winkelform für das Melkzeug 5 vorgesehen.

Wird die Oberarmantriebshohlwelle 32 angetrieben, verschwenkt der Oberarm 10 um die Vertikalachse 26. Wird die Unterarmantriebswelle 30 angetrieben, so überträgt hier ein Zugmittel, z.B. ein Riemen, als Unterarmtriebelement 36 (Figur 25b) die Verschwenkbewegung von einer mit der Unterarmantriebswelle 30 verbundenen Unterarmantriebsrolle 34 auf eine auf der Zwischenachse 27 angeordneten weiteren Unterarmantriebsrolle 34a. Die weitere Unterarmantriebsrolle 34a ist mit dem Unterarm 11 verbunden und verschwenkt somit den Unterarm 11.

Unterarmtriebelement 36 ist mit einer Spanneinheit 38, z.B. ein Riemenspanner, gekoppelt und bildet somit einen elastischen Überlastschutz gegen Tritte oder zur Abfederung bei Kollisionen mit Tieren, z.B. deren Beinen.

Die Parallelführungsreferenz 31 gibt die Winkelstellung der Parallelführung vor und wird nicht aktiv angetrieben. Diese Winkelstellung ist vorher festlegbar und veränderbar. Diese Winkelstellung wird direkt über ein Parallelführungstriebelement 35, z.B. Zugmittel (Riemen), von einer mit der Parallelführungsreferenz 31 verbundenen Parallelführungsrolle 33 auf eine weitere auf der Zwischenachse 27 angeordneten Parallelführungsrolle 33a übertragen, wie aus Figur 25a zu entnehmen ist. Die weitere Parallelführungsrolle 33a ist mit einer Parallelführungsrolle 39 des Unterarms 11 über eine Koppelwelle 41 verbunden. Beide Parallelführungsrollen 33a und 39 weisen dadurch gleiche Winkelstellungen auf. Die Koppelwelle 41 ist in einer Lagereinheit 42 (Figur 25d) gelagert und erstreckt sich durch die Unterarmantriebsrolle 34a, welche mit dem Unterarm 11 über die Lagereinheit 42 fest verbunden ist. Ein weiteres Parallelführungstriebelement 40, z.B. ein Zugmittel (Riemen), überträgt die Winkelstellung der Parallelführungsrolle 39 auf eine weitere Parallelführungsrolle 39a, welche auf der Halterachse 28 angeordnet und mit dem Halter 29 für das Melkzeug 5 gekoppelt ist. Dies zeigt Figur 25c.

Auf diese Weise ist die Verschwenkung des Melkzeugs 5 um die Halterachse 28 parallel geführt und hat unabhängig von den Bewegungen von Oberarm 10 und Unterarm 11 um die Achsen 26, 27 eine konstante, von der Parallelführungsreferenz 32 bestimmte Winkelstellung.

Im Unterarm 11 ist auch eine Spanneinheit 38', z.B. ein Riemenspanner, angeordnet, was zum elastischen Überlastschutz weiterhin beiträgt. Außerdem ist das Parallelführungstriebelement 35 im Oberarm 10 mit zwei Dämpfungseinheiten 37, 37', die aus Federspannern bestehen, gekoppelt und trägt auch zum Überlastschutz bei.

Die Vorteile der Armeinrichtung 6" mit den Triebelementen 35, 36, 40, d.h. Zugmittel, sind im Folgenden aufgelistet.
- Parallelführung ist zwangsgeführt ohne zusätzliche Messsysteme
- Parallelführung benötigt keinen zusätzlichen Aktor
- Innen in den Armen angeordnete Triebelemente 35, 36, 40 ermöglichen eine sehr schlanke Bauform
- Es gibt keine Totpunkte wie bei Schubstangen
- Verwendung von Wellen in Hohlwellen ergibt eine schmale Bauform
- Geräuscharmut durch Riemen
- Nachgiebigkeit (Trittschutz), Wirkung wie eine kleine Feder
- Allgemeiner Überlastschutz durch Zugmittel und auch zusätzliche Spanner

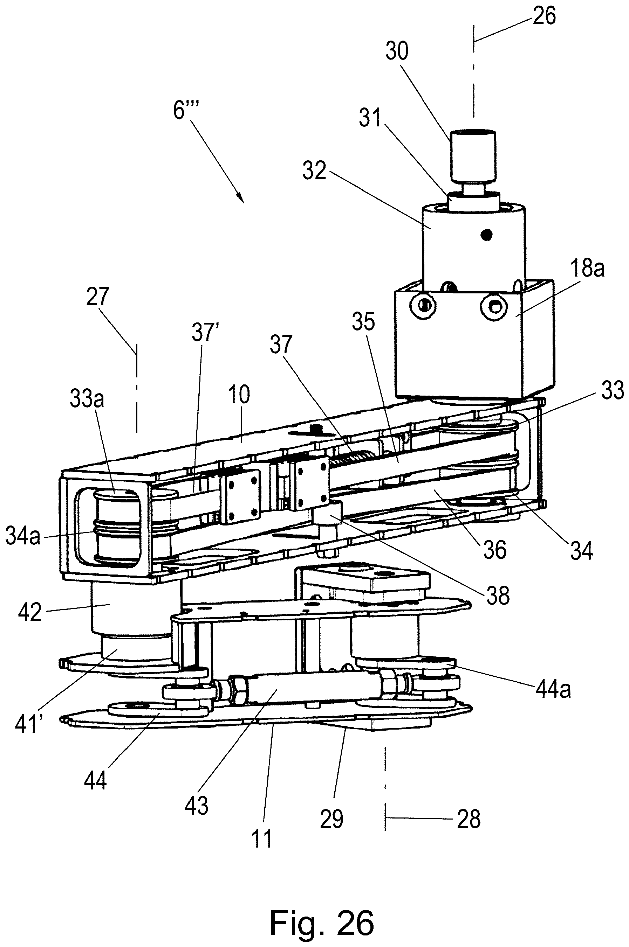

Figur 26 zeigt eine perspektivische Teilschnittdarstellung einer dritten Variation der Armeinrichtung 6‴ des erfindungsgemäßen Platzteilers 4. Die Arme 10 und 11 sind zur besseren Darstellung geöffnet gezeigt.

In dieser Variation ist der Oberarm 10 wie der Oberarm 10 einschließlich der Antriebswellen der zweiten Variation nach Figuren 24-25 gestaltet. Die Parallelführung des Unterarms 11 ist hier in einer Kombination mit dem Zugmittel des Oberarms 10 durch eine Koppelstange 43 ausgebildet, welche mit ihren Enden an Koppelhebel 44, 44a gelenkig angelenkt ist und somit die Parallelführung ermöglicht. Der Koppelhebel 44 ist über die Koppelwelle 41' mit der Parallelführungsrolle 33a des Oberarms 10 verbunden und überträgt so die Winkelstellung der Parallelführungsreferenz 32 auf die Koppelstange 43 und den Halter 29 mit dem Melkzeug 5.

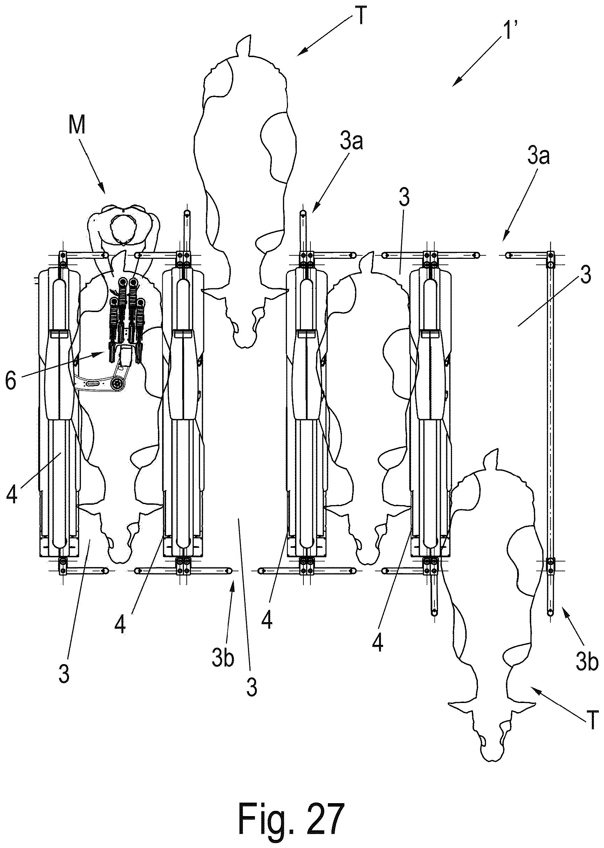

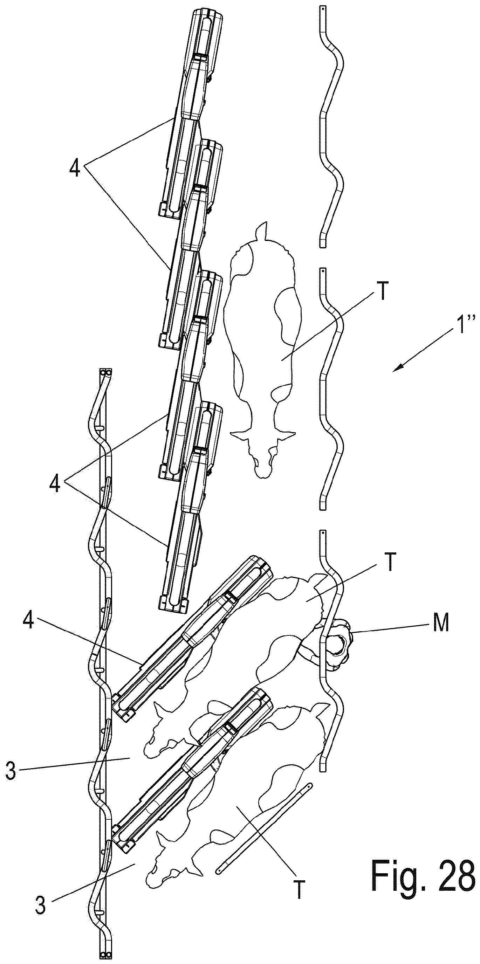

In Figur 27 ist eine schematische Draufsicht einer Variante des zweiten Ausführungsbeispiels nach Figur 2-2a gezeigt. Diese Variante wird auch als Durchtreiber-Melkstandanordnung 1' bezeichnet. Die Melkstände 3 sind durch die Platzteiler 4 seitlich getrennt. An den schmalen Rückseiten und Vorderseiten der Melkstände 3 sind jeweils Tore 3a, 3b angeordnet, wobei die Tore 3a an den Rückseiten geöffnet sind, um einen Einlass für ein Tier T in den Melkstand 3 zu bilden (zweiter Melkstand 3 von links in Figur 27). Das Tier T kann an der Vorderseite nicht heraustreten, da diese durch die Tore 3b verschlossen sind. Befindet sich ein Tier T vollständig im Melkstand 3, so werden die Tore 3a der Rückseite verschlossen (Erster und dritter Melkstand 3 von links in Figur 28). Ist der Melkvorgang beendet, öffnen sich die Tore 3b der Vorderseite, und die Tiere T können den Melkstand 3 wieder verlassen, wie bei dem vierten Melkstand 3 von links in der Figur 28 dargestellt ist.

Auch eine Art Fischgrätenaufbau ist natürlich auch möglich, wobei die Melkstände 3 durch die Platzteiler 4 getrennt sind. Dies zeigt Figur 28 in einer schematischen Draufsicht einer Variante des dritten Ausführungsbeispiels nach Figur 3. In Figur 3 sind die Melkstände 3 durch die Platzteiler 4 gebildet, welche zuvor so gegeneinander geklappt sind, dass ein Gang als Einlauf gebildet ist, wobei die gegeneinander geklappten Platzteiler 4 eine durchgehende Begrenzung dieses Einlaufs bilden. Erreicht das erste Tier T das Ende der Melkstandanordnung, das durch eine nicht näher bezeichnete Begrenzung gebildet ist, die in Figur 3 rechtwinklig und in Figur 28 in einem Winkel, z.B. 45°, zur Längsachse des Einlaufs steht, so wird der erste Platzteiler 4 im Uhrzeigersinn verdreht, bis er parallel zu dieser Begrenzung verläuft und mit ihr den ersten Melkstand 3 bildet. Auf diese Weise werden alle Melkstände durch die entsprechende Verschwenkung der Platzteiler 4 nacheinander gebildet. Durch die Schrägstellung der Tiere T, d.h. ihre gedachten Längsachsen verlaufen in dem Winkel zur Längsachse des Einlaufs, sind die hinteren Bereiche der Tiere T für einen Zugriff eines Melkers M von der Seite her frei. In Figur 28 ist diese jeweils die linke Seite eines Tiers T.

Es ist bei den Melkstandanordnungen 1' nach Figur 3 und 28 auch möglich, dass die Platzteiler 4 nicht gegeneinander geklappt sind, sondern in ihren Längsachsen verschiebbar angeordnet sind. Dies wird weiter unten noch näher beschrieben. Die Platzteiler 4 sind zuvor außerhalb des Bereichs der Tiere T schon in der parallelen Anordnung zu der Begrenzung (rechtwinklig oder schräg) aufgestellt. Sobald sich das erste Tier T mit seiner gedachten Längsachse neben der Begrenzung aufgestellt hat, wird der erste Platzteiler 4 in Richtung seiner Längsachse so in den Bereich der Tiere T hineingeschoben, dass er auf der anderen Seite des Tieres T steht und den Melkstand 3 bildet. Beim Verlassen der so gebildeten Melkstände 3 wird die Begrenzung geöffnet (geschwenkt oder auch in Richtung ihrer Längsachse verschoben), und das erste Tier T kann den Melkstand 3 verlassen. Dann wird die der erste Platzteiler 4 wieder in Richtung seiner Längsachse in seine Ausgangsstellung zurück geschoben, usw.

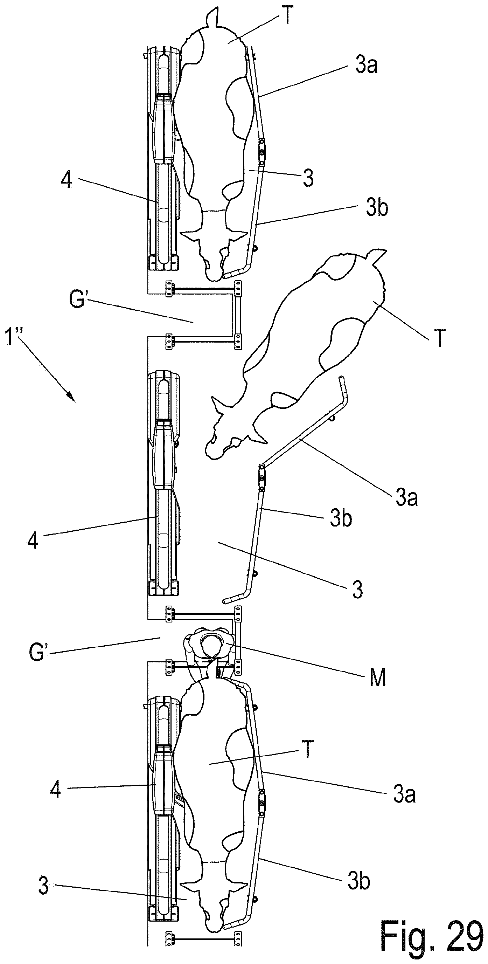

In Figur 29 ist eine schematische Draufsicht einer weiteren Variante des dritten Ausführungsbeispiels nach Figur 3 dargestellt. Diese Melkstandanordnung 1" wird auch als Tandemanordnung bezeichnet. Hier sind die Melkstände 3 hintereinander bzw. in Reihe angeordnet, wobei ihre schmalen Seiten durch die Grube G' für den Melker M beabstandet sind und jeweils Begrenzungen, z.B. Gitter, aufweisen. Die Längsseiten der Melkstände 3 werden zum Einen jeweils durch einen Platzteiler 4 und durch eine zweiteilige Begrenzung, die als Tore 3a, 3b ausgeführt sind, gebildet. Das Tor 3a des mittleren Melkstands 3 ist aufgeschwenkt, um ein Tier T in den Melkstand 3 zu lassen, wobei das Tor 3b geschlossen ist. Während des Melkvorgangs sind beide Tore 3a, 3b geschlossen. Nach dem Melken öffnet sich das zum Kopf des Tiers T weisende Tor 3b, und das Tier T kann den Melkstand 3 verlassen.

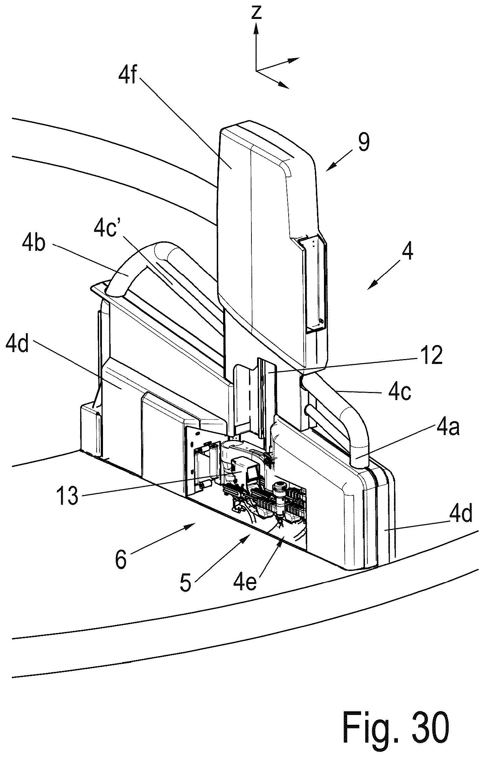

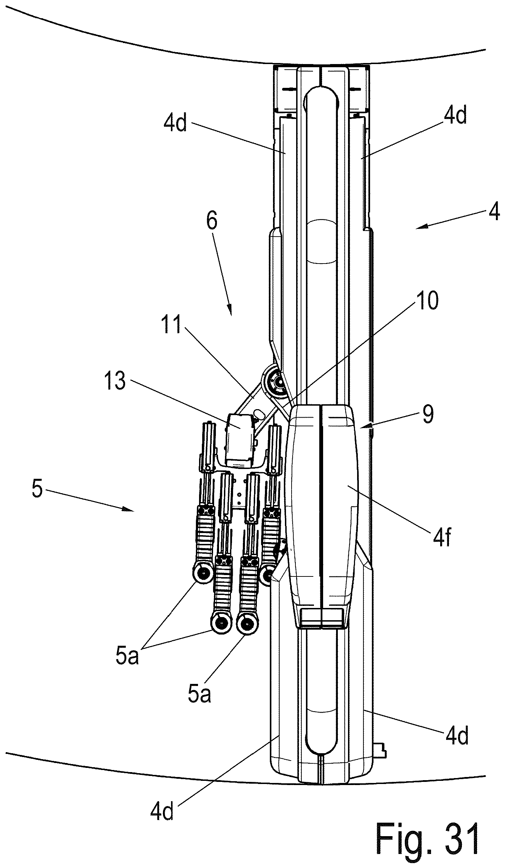

Figur 30 stellt eine schematische Perspektivansicht des erfindungsgemäßen Platzteilers 4 nach Figur 4 in einer Verkleidungsvariante dar. Figur 31 zeigt eine Draufsicht mit z.T. ausgefahrenem Melkzeug 5. Der Pfosten 4a ist niedriger als der Pfosten 4b. Daraus ergibt sich der Vorteil, dass eine Kuh den Melkstand 3, insbesondere ein Melkstand 3 auf dem Melkkarussell, schneller verlassen kann, da sie mit dem Kopf über die obere Horizontalstange 4c schwenken kann, wenn sie sich damit umdreht. Somit ist ein schnellerer Tierverkehr ermöglicht. Der Pfosten 4b weist eine kurvenförmig ausgebildete Verbindung zur Horizontalstange 4c auf. Eine weitere Horizontalstange 4c' ist zur Versteifung unterhalb der oberen Horizontalstange 4c zwischen den Pfosten 4a und 4b angeordnet und verbindet diese zusätzlich. Die gesamte Verkleidung besteht aus den oben bereits erwähnten seitlichen Verkleidungen 4d des Platzteilers 4 und einer Antriebsverkleidung 4f, die den gesamten Antriebsbereich in vertikaler Richtung und an seinen Schmalseiten herum verschließt. Die Unterseite der Antriebsverkleidung 4f ist mit der Oberseite der seitlichen Verkleidung 4d so verbunden, dass eine allseitige Umhüllung des Platzteilers 4 erzielt ist. Dieser Übergangsbereich, in welchem sich die Oberarmantriebswelle 12 zwischen der Antriebsverkleidung 4f und der Oberseite der Verkleidung 4d hindurch erstreckt, ist in Figur 30 teilweise aufgeschnitten gezeigt. Die Aufnahme 4e kann natürlich wie oben beschrieben mit einer zusätzlichen Abdeckung verschlossen werden, die hier nicht gezeigt aber leicht vorstellbar ist.

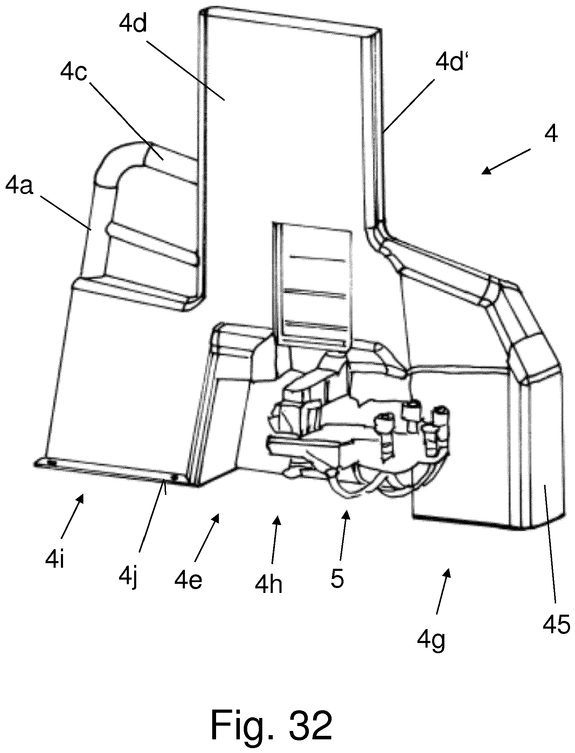

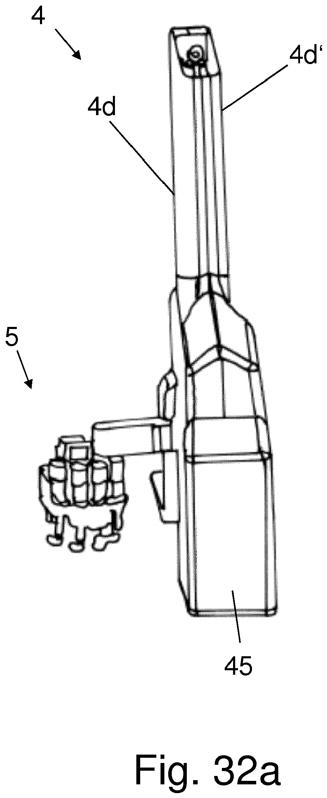

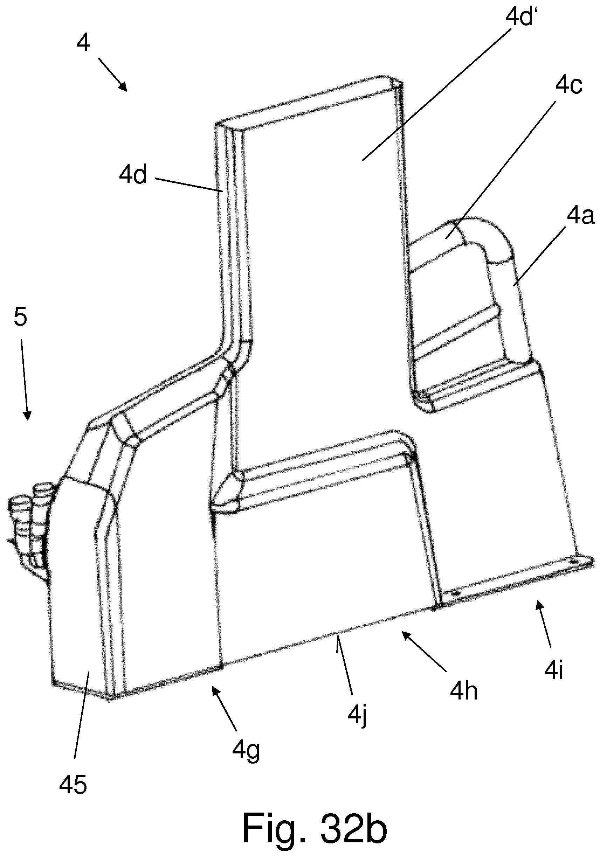

Die Figuren 32, 32a und 32b zeigen schematische Ansichten des erfindungsgemäßen Platzteilers 4 nach Figur 4 in einer weiteren Variante. Dabei ist in Figur 32 eine Seitenansicht mit dem Melkzeug 5 gezeigt. Figur 32 stellt eine Perspektivansicht von hinten mit ausgefahrenem Melkzeug 5 dar, und Figur 32b zeigt eine weitere Seitenansicht.

Der Platzteiler 4 ist in dieser Variante in einem Modulkonzept aufgebaut, das unten noch ausführlich erläutert wird. In dieser Variante umfasst die Verkleidung 4d zwei selbsttragende Halbschalen, die mit den Bezugszeichen 4d und 4d' bezeichnet sind. Sie bestehen z.B. aus 3 mm Edelstahlblech und sind durch ein Hydroformverfahren geformt.

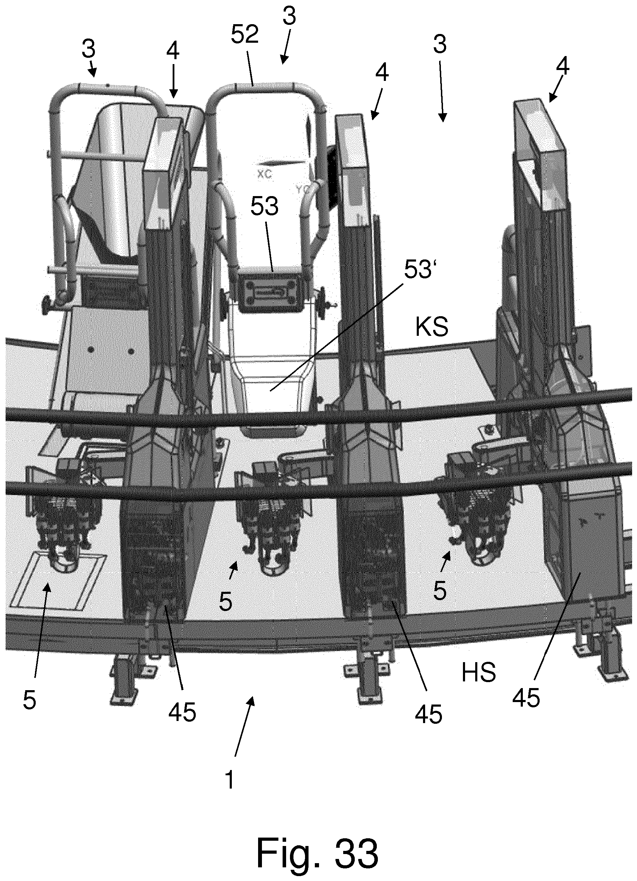

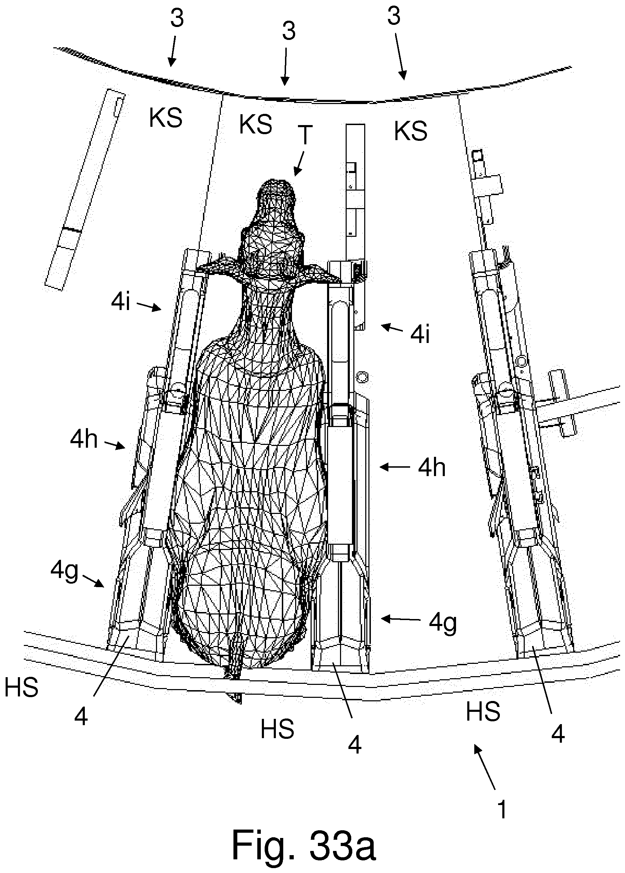

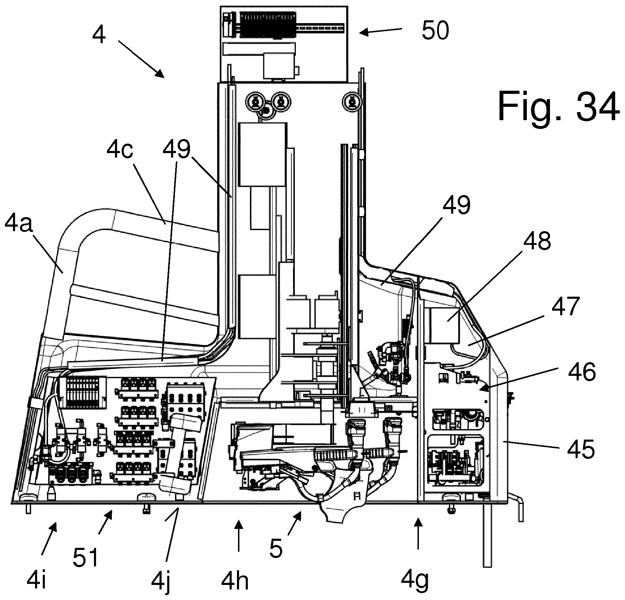

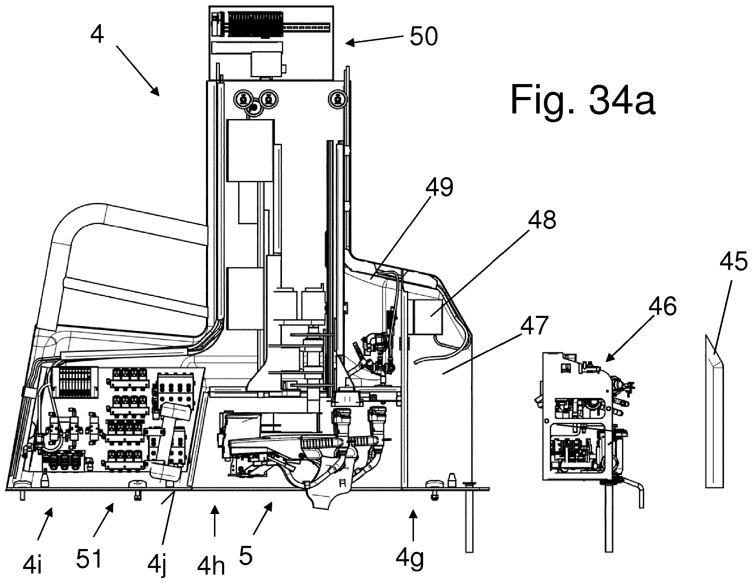

Dabei sind diese Halbschalen in Abschnitte 4g, 4h und 4i aufgeteilt. Die Zuordnung der Abschnitte 4g, 4h und 4i zu der Seite eines zu melkenden Tieres T wird unten im Zusammenhang mit Figur 33a noch erläutert. Der Abschnitt 4g ist dem Hinterteil eines zu melkenden Tieres T zugeordnet und wird als Hinterteilabschnitt 4g benannt. Er enthält einen Aufnahmeraum 47 für eine Serviceeinheit 46 (siehe Figuren 34 und 34a). Der Aufnahmeraum 47 ist stirnseitig durch einen Deckel 45 verschließbar (siehe auch Figuren 34 und 34a). Dies wird unten weiter noch beschrieben.

An den Hinterteilabschnitt 4g schließt sich ein Mittelabschnitt 4h an, welcher die Aufnahme 4e für das Melkzeug 5 mit der Armeinrichtung 6 und die zugehörigen Antriebe wie oben beschrieben aufweist. Der Mittelabschnitt 4h ist der Mitte des zu melkenden Tieres T zugeordnet.

Ein Kopfabschnitt 4i ist dem Kopf des zu melkenden Tieres T zugeordnet und ist mit dem Pfosten 4a verbunden, welcher an seiner Oberseite in einem Radius nach hinten gebogen ist und in die Horizontalstange 4c, die hier nach hinten unten geneigt ist, übergeht. Die Horizontalstange 4c erstreckt sich bis zu einer vorderen Stirnseite des Mittelabschnitts 4h, die sich hier nach oben erstreckt und mit der Horizontalstange 4c verbunden ist. Die Neigung der Horizontalstange 4c nach hinten setzt sich in einer Neigung der Oberseite des Hinterteilabschnitts 4g fort.

Eine Unterseite 4j des Platzteilers 4 ist so gestaltet, dass der Platzteiler 4 auf einfache Weise von dem Melkstand 3 demontierbar und auf dem Melkstand 3 montierbar ist. Dies wird unten noch näher erläutert.

Der Platzteiler 4 ist in dieser Variante mit gerundeten Kanten und kompakten Abmessungen ausgebildet. Dies ist bei dem Formverfahren auf einfache Weise möglich. Die beiden Halbschalen der Verkleidung 4d und 4d' können auf unterschiedliche Weise so miteinander verbunden werden, dass außerhalb keine störenden Vorsprünge vorhanden sind.

Figur 33 zeigt eine schematische Perspektivansicht mehrerer Melkstände 3 nach dem ersten Ausführungsbeispiel nach Figur 1. In Figur 33a ist eine schematische Draufsicht der Melkstände 3 nach Figur 33 gezeigt.

Die Längsseiten der Melkstände 3 werden durch die Platzteiler 4 gebildet, die hier auf einem Melkkarussell wie in Figur 1 angeordnet sind. Die Melkstände 3 weisen jeweils zwei Schmalseiten auf, die jeweils zwischen den vorderen und hinteren Enden der Längsseiten angeordnet sind. Dabei wird eine der beiden Schmalseiten eines Melkstands 3 als Kopfseite KS benannt, nämlich diejenige, welche dem Kopf des zu melkenden Tieres T zugeordnet ist. Die andere der beiden Schmalseiten wird Hinterteilseite HS genannt; sie ist dem Hinterteil des zu melkenden Tieres T zugeordnet.

Die Kopfseiten KS der in Figur 33 gezeigten beiden linken Melkstände 3 sind hier jeweils mit einem Rahmen 52 versehen, welcher zwei übereinander angeordnete Erkennungseinrichtungen 53, 53' zur Erkennung des zu melkenden Tieres T, z.B. über RFID, aufweist. Dies soll hier nicht weiter beschrieben werden.

Die Platzteiler 4 sind hier in der Variante nach Figur 32-32b ausgebildet. Dieser Platzteiler 4 beinhaltet trotz seiner kompakten Abmessungen alle Komponenten zum Predippen, Zitzenreinigen, Ansetzen des Melkzeugs, Melken, Abnehmen des Melkzeugs, Postdippen. Dadurch ist der Platzteiler 4 in dieser Variante ein autarkes Modul, welches alle Komponenten aufweist. Damit sind Vorteile bei der Erstmontage vor Ort gegeben. Diese Platzteiler 4 werden komplett montiert geliefert und brauchen nur noch an die gemeinsame Infrastruktur (Netzwerk, Milchleitungen, Druckluft, Wasser usw.) der Melkstandanordnung angeschlossen werden. Dies kann über jeweilige Schnellanschlüsse erfolgen. Dabei besteht auch der Vorteil, dass zu Reparaturzwecken der gesamte Platzteiler 4, der auch als Stallunit bezeichnet werden kann, von dem Boden des Melkstands 3 auf einfache Weise demontierbar und durch einen überarbeiteten oder neuen Platzteiler 4 ersetzbar ist. Aufgrund der Modulbauweise der Platzteiler 4 ist es auf einfache Weise möglich, Ausführungen entsprechend besonderer Vorschriften, z.B. FDA (Food and Drug Administration der USA [FDA-Konformität: Die Regeln einer guten Herstellungspraxis - GMP -, die in den Codes of Federal Regulation - CFR - von der FDA der USA enthalten sind, zählen in der milchverarbeitenden Industrie weltweit zum Standard) und andere Versionen, bereitzustellen.

Es ist natürlich auch möglich, dass zusätzlich (z.B. als Redundanz) Funktionsgruppen in einem weiteren Gehäuse, z.B. an der Kopfseite des Melkstands 3 in dem Rahmen 52 vorgesehen sind.

Hierbei ist es auch möglich, einen Dummy als Platzteiler 4 zu verwenden, wenn kein Austausch-Platzteiler 4 zur Verfügung steht. Dadurch kann nur ein Melkplatz gesperrt werden, ansonsten müssten zwei Melkplätze aufgrund des fehlenden Platzteilers 4 gesperrt werden.

In Figur 33a ist die Zuordnung der Abschnitte 4g, 4h und 4i der Platzteiler 4 an den Längsseiten eines Melkstands 3 zu dem auf dem Melkstand 3 befindlichen zu melkenden Tieres T dargestellt. Das Tier T, hier als Kuh angedeutet, steht mit seinem Kopf der Kopfseite KS des Melkstands 3 zugewandt. Das Hinterteil des Tieres T befindet sich an der Hinterteilseite HS des Melkstands 3. Die Hinterteilabschnitte 4g sind dem Hinterteil, die Mittelteilabschnitt 4h der Mitte und die Kopfabschnitte 4i dem Kopf des zu melkenden Tieres T zugeordnet.

Es ist in den Figuren 33 und 33a deutlich zu erkennen, dass sich die Platzteiler 4 der Kontur des zu melkenden Tieres T anpassen. Im unteren Bereich (Beinbereich) sind die Platzteiler 4 breiter (Unterbringung der CIP und des eingeklappten Melkzeugs 5 mit Armeinrichtung 6). Im Bauchbereich des zu melkenden Tieres T sind die Platzteiler 4 extrem schmal. Im oberen Bereich des zu melkenden Tieres T sind geringfügig breitere Platzteiler 4 möglich.

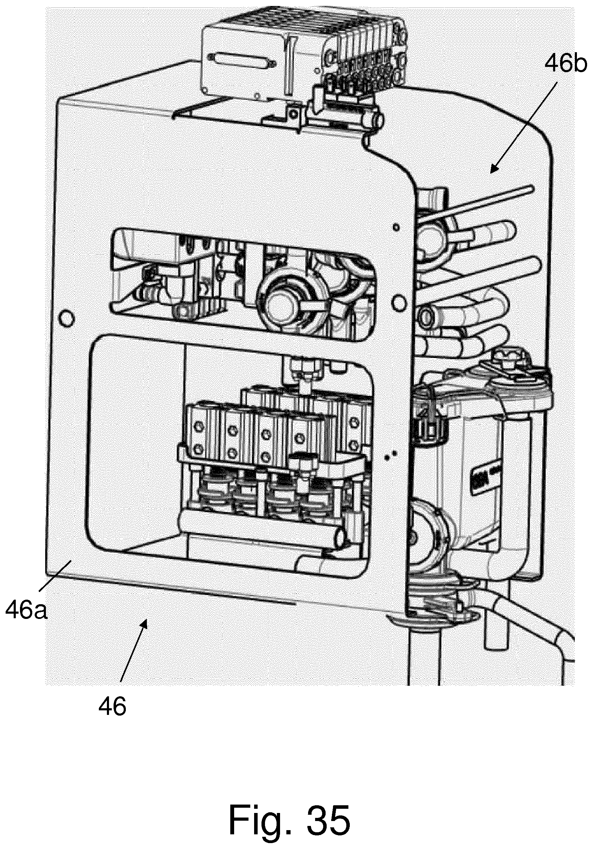

Figur 34 zeigt eine schematische Innenansicht der Variante nach Figur 32 mit einer eingesetzten Serviceeinheit 46. In Figur 34a ist die Innenansicht der Variante nach Figur 34 mit der herausgenommenen Serviceeinheit 46 dargestellt. Figur 35 zeigt eine schematische Perspektivansicht der Serviceeinheit 46.

Die Serviceeinheit 46 ist in dem Aufnahmeraum 47 in dem Hinterteilabschnitt 4g des Platzteilers 4 eingesetzt. Der Aufnahmeraum 47 ist durch die Abdeckung 45 verschlossen. Die Serviceeinheit 46 beinhaltet alle servicerelevanten, hauptsächlich milchführenden Teile (Dichtungen, Membrane, Messeinrichtungen, Sensoren, Blutsensoren). Sie kann im laufenden Betrieb durch eine neue oder überarbeitete Serviceeinheit 46 ausgetauscht werden. Dazu ist die Serviceeinheit 46 innerhalb des Aufnahmeraums 47 auf einfache Weise arretierbar und mit einer Installation 49 über geeignete Verbindungseinrichtung(en) 48 (z.B. Schnellverbinder) verbindbar. Dazu ist eine besondere Anschlusskonfiguration zum einfachen, fehlerfreien Auswechseln vorgesehen.

Die Installation 49 umfasst zentral verlegte Leitungen (z.B. Steuerleitungen), welche die Einrichtungen der Serviceeinheit 46 mit einer Steuereinheit 50 verbinden, die an der Oberseite des Mittelabschnitts 4h des Platzteilers 4 angeordnet ist. Außerdem verbindet die Installation 49 die Steuereinheit 50 mit einer weiteren Funktionseinheitengruppe 51. Diese Funktionseinheitengruppe 51 umfasst z.B. Pneumatik, Elektronik, Dipptechnik usw. und ist in dem Kopfabschnitt 4i des Platzteilers 4 angeordnet.

Die Serviceeinheit 46 (und auch die Funktionseinheitengruppe 51 in entsprechender Weise) weist einen Tragrahmen 46a auf, welcher in dem Aufnahmeraum 47 einsetzbar und arretierbar ist und alle Komponenten, z.B. eine Milchgruppe mit milchführenden Teilen, trägt. Das Gewicht und die Handhabbarkeit der Serviceeinheit 46 ist so bemessen, dass sie leicht einsetzbar und herausnehmbar, tragbar und transportierbar ist. Die Serviceeinheit 46 und die Funktionseinheitengruppe 51 werden auch als Servicerack bezeichnet, wobei der Begriff Rack eine Trageinheit bedeutet.

Die Abdeckung 45 kann als separates Teil ausgebildet und/oder an der Serviceeinheit 46 angebracht sein.

Die Serviceeinheit 46 und die Funktionseinheitengruppe 51 sind in den jeweiligen Abschnitten 4g und 4i des Platzteilers 4 so angeordnet, dass sie gut zugänglich für eine einfache Montage und Reparatur sind.

Der Platzteiler 4 kann auch Rollen an seiner Unterseite 4j aufweisen, um nach Lösen der Schnellverschlüsse und Anheben (Gewicht ca. 300 kg) leicht entfernbar ist. Zur Montage und Wartung kann die Melkstandanordnung 1 mit einer Servicebühne (nicht gezeigt) versehen sein, welche beispielsweise mit einer Unterbrechung von hinteren Begrenzungen so zusammenwirkt, dass der zu entfernende Platzteiler 4 leicht auf diese Servicebühne geschoben werden kann. Die Servicebühne kann natürlich auch einen Kran hierzu aufweisen. Außerdem kann der Melkstandanordnung 1 bzw. der Servicebühne ein Arbeitstisch zugeordnet sein, auf welchem der zu wartende bzw. reparierende Platzteiler 4 vor Ort mit allen Anschlüssen anschließbar ist. Dazu kann dieser Arbeitstisch auch eine Aussparung aufweisen, damit die Armeinrichtung 6 mit dem Melkzeug 5 aus dem Platzteiler 4 demontiert oder angebracht werden kann. Der Wechsel eines Platzteilers kann so z.B. 10 min dauern.

Bei einer beispielhaften Melkstandanordnung 1 wird alle 6 s ein Tier T gemolken, z.B. 3500 Tiere dreimal pro Tag. Es ist jeweils zweimal eine Stunde pro Tag für Reinigen, Spülen usw. vorgesehen. Die Melkstandanordnung 1 soll möglichst ohne Stillstand 24 Stunden am Tag und 7 Tage in der Woche in Betrieb sein. Für diese Anforderungen ist der Platzteiler 4 als oben beschriebene Modulausführung besonders vorteilhaft, da durch die schnelle Wartung und Austauschbarkeit Ausfallzeiten der Melkstandanordnung 1 minimiert werden.

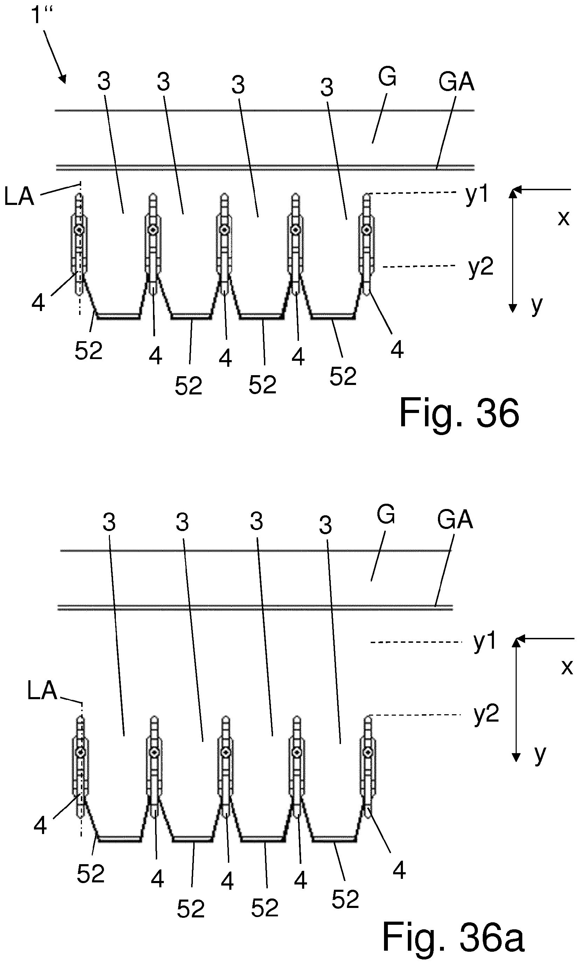

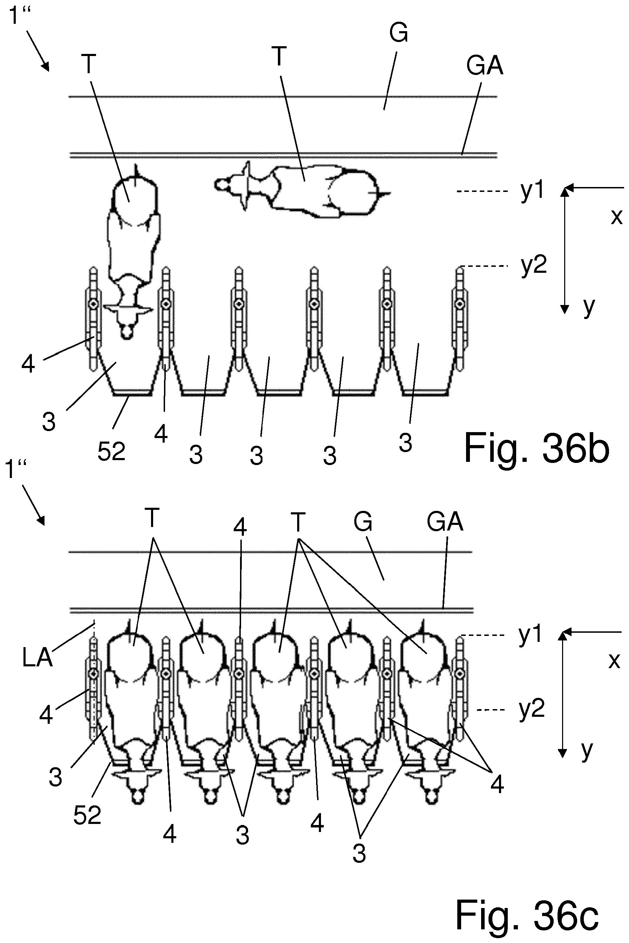

Die Figuren 36 bis 36c zeigen eine Side-by-Side Melkstandanordnung 1" mit verstellbaren Platzteilern 4. In Figur 36 ist eine Melkstellung y1 der Melkstände 3 ohne Tiere gezeigt. Figur 36a stellt eine Zugangsstellung y2 der Melkstände 3 ohne Tiere dar. Figur 36b zeigt die Zugangsstellung y2 nach Figur 36a mit Tieren T, und in Figur 36c ist die Melkstellung y1 nach Figur 36 mit Tieren T dargestellt.

In den Figuren 36 bis 36c sind Rahmen 52 zwischen den vorderen Enden der Platzteiler 4 eines jeden Melkstands 3 angeordnet. Die Rahmen 52 können z.B. die Erkennungseinrichtungen 53, 53' (Figur 33) und auch Futtertröge (nicht gezeigt) umfassen.

Um den Platzteiler 4 mit dem Melkzeug 5 erfolgreich auch in Gruppenmelkständen wie z.B. der Melkstandanordnung 1" nach Figur 36-36c zum Einsatz zu bringen, ist gegenüber der Festinstallation in Tandemboxen (siehe Figur 29) und auf Außenmelker-Karussellen (siehe Figur 1) eine Modifikation für Side-by-Side (siehe Figur 2-2a), steile und normale Fischgräte Melkstände (siehe Figur 28) erforderlich.

In den ersteren Fällen dient der Platzteiler 4 mit dem Melkzeug 5 generell auch als absolute Platzabtrennung zwischen den Melkständen 3. Es darf dabei kein Tier T vorbei auf einen anderen Melkstand 3 als den hierfür vorgesehenen leiten. Dementsprechend lässt dieser Platzteiler 4 keinen Durchgang zu einem anderen Melkstand 3 zu.

Wird aber in einem Side-by-Side oder Fischgrät-Gruppenmelkstand gearbeitet, so muss ein Tier T, hier eine Kuh, erst einmal bei Betreten des Gruppenmelkstandes vom Eingang in einer Zugangsrichtung x bis zum von dort zum entferntesten befindlichen freien Melkstand 3 gehen und diesen Platz besetzen. Würde sie einen früheren Melkstand 3 belegen, könnte nicht die gesamte Anzahl von Melkständen 3 mit zu melkenden Kühen belegt werden. Zudem besteht die Gefahr, dass die so nicht zu fixierenden Kühe während des Melkvorganges den Freiraum nutzen und einen anderen Melkstand 3 aufsuchen. Das würde dem Melkprozess unterbrechen und ein erneutes Ansetzen der Melkzeuge 5 erfordern.

Der bisherige Stand der Technik sieht in einigen Gruppenmelkstandformen wie zum Beispiel im Side-by-Side daher Schwenktore an jedem einzelnen Melkstand 3 vor (siehe Figur 28). Diese ermöglichen es, dass den Kühen beim "Befüllen der Melkstände 3" ein breiterer Zugangsweg in Zugangsrichtung x zwischen Melkstandabtrennung und Grubenabtrennung GA der Grube G für einen Melker M angeboten werden kann. Damit wird der Tierverkehr positiv beeinflusst, weil die Kühe auf ihrem Weg zum Melkstand keine Berührung mit den Grubenabtrennungen GA erfahren.

Diese wären in der Regel sehr schmerzhaft und würden auf Dauer zu einem sehr langsamen und vorsichtigem Befüllen der Melkstände 3 führen. Da der konstruktive Aufwand, den Platzteiler 4 als schwenk- oder drehbare Einheit zu gestalten unter Umständen recht hoch sein kann, könnte man alternativ auch sämtliche Platzteiler 4 einer Gruppenmelkstandseite einzeln oder gruppenweise oder in einer Einheit in einer Verstellrichtung y verstehen, wobei die Verstellrichtung y in einer Längsrichtung LA der Platzteiler 4 verläuft.

Soll eine neue Kuhgruppe eingelassen werden, so werden die Platzteiler 4 aus der Melkstellung y1 in eine "Kuh-Ladeposition" bzw. in die Zugangsstellung y2 verfahren. Dies bedeutet, dass alle Platzteiler 4 in Richtung des Kopfes der zu melkenden stehenden Tiere T, d.h. in der Längsrichtung LA der Platzteiler 4 in der Verstellrichtung y verfahren werden. Damit ergibt sich eine größere Distanz zwischen Platzteiler 4 und Grubenabtrennung GA, wie in der Figur 36a und 36b deutlich zu erkennen ist.

Während des "Ladevorganges" haben die Kühe genügend Platz, um ohne in Berührungen mit den Platzteiler 4 zu kommen, hinter den einzelnen Abtrennungen hergehend ihren nächstmöglichen Melkstand 3 zu erreichen. Ggf. kann dazu jeder einzelne Platzteiler 4 so konfiguriert sein, dass die Kühe erst einen Teilbereich des jeweiligen Melkstands 3 betreten können und erst bei vollständiger "Auffüllung" mit Kühen der Melkstand 3 zum vollständigen Eintritt freigegeben wird. Vorzugsweise ist der freizugebende Bereich nur derart bemessen, dass auch nur eine Kuh dort hindurch gehen kann, damit zum Beispiel Durchlauferkennungssysteme im Eingangsbereich die Kühe auch störungsfrei den nacheinander jeweilig zu belegenden Melkständen zuordnen können.

Sind alle Melkstände 3 belegt, so können die Platzteiler 4 nun aus der Zugangsstellung y2 in die Melkstellung y1 verfahren werden. Dazu werden sie in ihrer Längsrichtung LA in Verstellrichtung in Richtung Grube G/Melkerstandort verfahren. Damit wird sichergestellt, dass die Platzteiler 4 möglichst nah an die hintere Grubenabgrenzung GA zur Grube G verfahren werden können. Gleichzeitig eröffnet die Möglichkeit der Längsverstellung der Platzteiler 4 in ihrer Längsachse LA, die im Wesentlichen parallel zu der Längsachse des jeweiligen Tieres T verläuft, auch die Möglichkeit, auf unterschiedlich große/lange Tiere T Rücksicht nehmen zu können. Über eine Erfassung der Tierbeinposition könnte der Platzteiler 4 dabei selbstständig die optimale Ansetzposition anfahren. Damit wäre der Platzteiler 4 auch bei manueller Melkweise immer in optimaler Position für den Melker M.

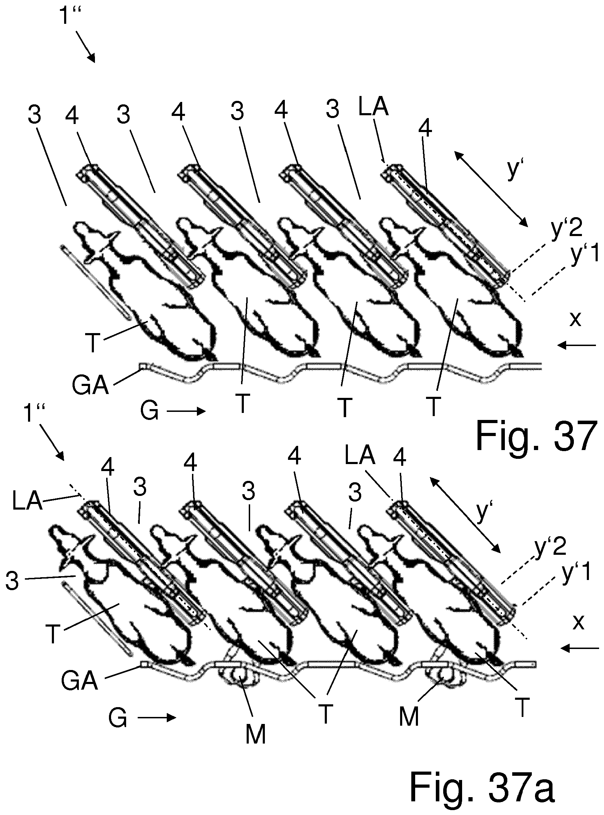

Gleiches gilt natürlich auch für sogenannte Fischgrätmelkstände mit einer Anwinkelung der Melkplatzanordnungen kleiner 90°. Hierzu ist eine Melkstandanordnung 1" in den Figuren 37 und 37a gezeigt. Figur 37 zeigt die Zugangsstellung y'2 der Platzteiler 4 und in Figur 37a ist die Melkstellung y'1 der Platzteiler 4 dargestellt.

Auch hier kann zwar ein Platzteiler 4 als schwenkbares Element zum Einsatz gebracht werden. Die Kräfte, die durch Tierberührungen jedoch dann auf eine nur zentrale Befestigung einwirken, können erheblich groß sein. Zudem kann bei einer derartigen Gestaltung eines Melkstands 3 das Thema Indexing, d.h. die richtige Positionierung von Tier zum Melkzeug 5 und ggf. zur Erreichbarkeit des Melkers M für manuelle Eingriffe, ein wichtiger Systembestandteil sein.

Dazu kann auch eine gezielte Verfahrung zwischen Futtertrog/-schale oder einer vorderen Fixierung am Kopf des Tieres T zu der zu erfolgenden Verstellung des Platzteilers 4 sinnvoll sein.

Figur 37a zeigt die bei der als Fischgräte aufgebauten Melkstandanordnung 1" zu erzielende Melkstellung y'1 während des Melkens. So ist der Melker M auch wieder in der Lage an das eigentliche Melkzeug 5 zu gelangen.

Die Erfindung ist nicht auf die oben dargestellten Ausführungsbeispiele beschränkt sondern im Rahmen der beigefügten Ansprüche modifizierbar.

So ist es z.B. denkbar, dass bei dem zweiten Ausführungsbeispiels der erfindungsgemäßen Melkstandanordnung 1' nach Figur 2 mehrere Reihen der nebeneinander angeordneten Melkstände 3 hintereinander oder sogar auch übereinander in mehreren Etagen angeordnet sein können.

In einer weiteren Ausführung ist es vorgesehen, dass die andockbaren Antriebseinheiten 9' der Variation des ersten Ausführungsbeispiels der Melkstandanordnung 1‴ nach Figur 14 nicht an der Schiene 23 verfahrbar sind, sondern jeweils durch eine Schwenkarmanordnung angesetzt und abgenommen werden können. Dies ist nicht gezeigt, aber leicht im Zusammenhang mit den Figuren 14-18 vorstellbar.

Der Positionssensor 13 kann in einer Erweiterung z.B. auch Bilder über den Zustand des Euters des zu melkenden Tieres liefern und somit zur Kenntnis des Gesundheitszustandes des zu melkenden Tieres beitragen.

Jeder Melkstand 3 kann für sich aktiviert oder gesperrt werden. Auch bei gesperrten Melkständen 3 kann die Melkstandanordnung 1 weiter betrieben werden, z.B. ist ein Anhalten des Melkkarussells nicht erforderlich.

Jeder Melkstand 3 kann für ein Tier individuell vorbereitet werden, z.B. unterschiedliche vordefinierte Vorpositionen des Melkzeugs 5 mit der Armeinrichtung 6, oder auch individuelle Verschiebung des Platzteilers 4 in der Längsachse zur Findung der günstigsten Melk- und Auslassposition für das jeweilige Tier. Bei der semi-automatischen Version kann die Vorposition des Melkzeugs 5 an das zu erwartende Tier in dem jeweiligen Melkstand 3 automatisch angepasst werden, wenn eine Erkennungseinrichtung (z.B. RFID) das jeweilige Tier erkennt, das den Melkstand 3 betritt. Außerdem kann es bei erkanntem Tier möglich sein, dass eine Vorpositionierung der Zitzenbecher 5a angepasst an die Eutermaße des erkannten Tieres vorgenommen werden kann.

Außerdem kann jeder Melkstand 3 eine Futtereinrichtung besitzen.

Zudem kann der Platzteiler 4 auch jeweils mit zwei Melkeinrichtungen, d.h. jeweils mit zwei Armeinrichtungen 6 mit jeweils einem Melkzeug 5, für ein rechts und links des Platzteilers 4 positioniertes zu melkendes Tier T aufweisen. Ggf. kann zwischen zwei solchen Platzteilern 4 ein vereinfachter Platzteiler ohne Melktechnik vorgesehen werden. Trotzdem ist dadurch ein Gesamtmontageaufwand reduziert.

Die Zugmittel der Armeinrichtung 6 können auch Ketten, Zahnriemen u.dgl. sein.

Das Melkzeug kann natürlich auch für milchgebende Tiere mit Eutern, die eine unterschiedliche Anzahl von Zitzen, z.B. 2, 3 oder 4, haben, verwendet werden.

Die Melkstandanordnung 1 als Melkkarussell kann so ausgebildet sein, dass auch mehrere 360° Drehungen für einen Melkvorgang eines bestimmten Tieres erfolgen können, wenn dies notwendig wird. Dann wird ein Auslass des Tieres aus dem Melkstand 3 verhindert, wenn dieser am Ausgang 8 ankommt.

Die Servicebühne kann höhenverstellbar, verfahrbar, fest installiert mit verfahrbarer Ausbildung sein. Hierzu sind viele Ausführungsformen vorstellbar.

### Bezugszeichen

- 1, 1', 1", 1‴: Melkstandanordnung
- 1a: Unterseite
- 1b: Melkplattform
- 2: Drehpunkt
- 3: Melkstand
- 3a, 3b: Tor
- 4: Platzteiler
- 4a, 4b: Pfosten
- 4c, 4c': Horizontalstange
- 4d, 4d': Verkleidung
- 4e: Aufnahme
- 4f: Antriebsverkleidung
- 4g: Hinterteilabschnitt
- 4h: Mittelabschnitt
- 4i: Kopfabschnitt
- 4j: Unterseite
- 5: Melkzeug
- 5a: Zitzenbecher
- 5b: Melkzeugträger
- 6, 6', 6", 6‴: Armeinrichtung
- 7: Zugang
- 8: Ausgang
- 9, 9': Antriebseinheit
- 10: Oberarm
- 10a: Schubstange Parallelführung
- 11: Unterarm
- 11a: Schubstange Parallelführung
- 11b: Schubstange Unterarm
- 12: Oberarmantriebswelle
- 12a: Ständer
- 12b: Befestigungsplatte
- 13: Positionssensor
- 14: Unterarmantrieb
- 14a: Unterarmwellenkopplung
- 15: Oberarmantrieb
- 15a: Oberarmwellenkopplung
- 16: Anlenkung
- 17: Reinigungseinrichtung
- 17a: Reinigungsdüse
- 18, 18a: Führungseinheit
- 19: Unterarmantriebswelle
- 20: Vertikalantrieb
- 20a: Vertikalantriebsrad
- 21: Halter
- 22: Fahrantrieb
- 22a: Fahrantriebsrad
- 23: Schiene
- 24: Kupplungseinheit
- 25: Kupplungselement
- 26: Vertikalachse
- 27: Zwischenachse
- 28: Halterachse
- 29: Halter
- 30: Unterarmantriebswelle
- 31: Parallelführungsreferenz
- 32: Oberarmantriebshohlwelle
- 33, 33a: Parallelführungsrolle
- 34, 34a: Unterarmantriebsrolle
- 35: Parallelführungstriebelement
- 36: Unterarmtriebelement
- 37, 37': Dämpfungseinheit
- 38, 38': Spanneinheit
- 39, 39a: Parallelführungsrolle
- 40: Parallelführungstriebelement
- 41, 41': Koppelwelle
- 42: Lagereinheit
- 43: Koppelstange
- 44, 44a: Koppelhebel
- 45: Abdeckung
- 46: Serviceeinheit
- 46a: Tragrahmen
- 46b: Milchgruppe
- 47: Aufnahmeraum
- 48: Verbindungseinrichtung
- 49: Installation
- 50: Steuereinheit
- 51: Funktionseinheitengruppe
- 52: Rahmen
- 53, 53': Erkennungseinrichtung
- α: Ansetzbereich
- B: Boden
- G, G': Grube
- GA: Grubenabtrennung
- KS: Kopfseite
- HS: Hinterteilseite
- LA: Längsachse
- M: Melker
- T: Tier
- x: Zugangsrichtung
- y: Verstellrichtung
- z: Vertikalrichtung

## Patentansprüche

1. Platzteiler (4) einer Melkstandanordnung (1, 1', 1", 1‴) für mindestens einen Melkstand (3) zum Melken von milchgebenden Tieren (T), wobei der Platzteiler (4) an einer Längsseite des Melkstands (3) angeordnet ist, aufweisend eine Armeinrichtung (6, 6', 6", 6‴) mit einem Melkzeug (5), welche aus einer Parkposition in eine Arbeitsposition und zurück verstellbar ist, wobei die Armeinrichtung (6, 6', 6", 6‴) mit dem Melkzeug (5) in der Parkposition in dem Platzteiler (4) angeordnet ist und in die Arbeitsposition derart verstellbar ist, dass das Verstellen des Melkzeugs (5) aus der Parkposition in dem Platzteiler (4) in die Arbeitsposition von der Seite des zu melkenden Tieres zwischen dessen Vorderbeinen und Hinterbeinen unter das Euter des zu melkenden Tieres erfolgt, **dadurch gekennzeichnet, dass** der Platzteiler (4) eine Verkleidung (4d, 4d') mit zwei selbsttragenden Halbschalen aufweist, wobei ein Abschnitt der Halbschalen einen Hinterteilabschnitt des Platzteilers bildet, und dass der Platzteiler (4) mindestens eine in einen Aufnahmeraum (47) ) in dem Hinterteilabschnitt (4g) einsetzbare und wieder herausnehmbare Serviceeinheit (46) aufweist, die alle servicerelevanten Funktionsgruppen und Komponenten, darunter Messeinrichtungen und Sensoren, aufweist, und die innerhalb des Aufnahmeraums (47) arretierbar und mit einer Installation (49) über mindestens eine Verbindungseinrichtung (48) verbindbar ist.

2. Platzteiler (4) nach Anspruch 1 **dadurch gekennzeichnet, dass** der Aufnahmeraum (47) durch eine Abdeckung (45) verschlossen ist.

3. Platzteiler (4) nach einem der vorhergehenden Ansprüche, **dadurch gekennzeichnet, dass** die Installation (49) zentral verlegte Leitungen umfasst, welche die Einrichtungen der Serviceeinheit (46) mit einer Steuereinheit (50) verbinden, die an einer Oberseite eines Mittelabschnitts (4h) des Platzteilers (4) angeordnet ist.

4. Platzteiler (4) nach einem der vorhergehenden Ansprüche, **dadurch gekennzeichnet, dass** die Serviceeinheit (46) einen Tragrahmen (46a) aufweist, welcher in dem Aufnahmeraum (47) einsetzbar und arretierbar ist und alle Komponenten, z.B. eine Milchgruppe mit milchführenden Teilen, trägt.

5. Platzteiler (4) nach einem der vorhergehenden Ansprüche, **dadurch gekennzeichnet, dass** der Platzteiler (4) mit seinen Funktionseinheiten und Komponenten eine vormontierte komplette Einheit bildet.

6. Platzteiler (4) nach einem der vorhergehenden Ansprüche, **dadurch gekennzeichnet, dass** die Armeinrichtung (6, 6', 6", 6‴) und das Melkzeug (5) in der Parkposition scherenförmig zusammenklappbar sind.

7. Platzteiler (4) nach einem der vorhergehenden Ansprüche, **dadurch gekennzeichnet, dass** die zwei selbsttragenden Halbschalen aus einem Edelstahlblech mittels eines Hydroformverfahrens geformt sind.

8. Platzteiler (4) nach einem der vorhergehenden Ansprüche, **dadurch gekennzeichnet, dass** der Platzteiler (4) mit Schnellverschlüssen zum Anschluss an eine Infrastruktur eines zuzuordnenden Melkstands (3) versehen ist.

9. Platzteiler (4) nach einem der vorhergehenden Ansprüche, **dadurch gekennzeichnet, dass** der Platzteiler (4) mit Rollen zum Transport versehen ist.

10. Melkstandanordnung (1, 1', 1", 1‴) zum Melken von milchgebenden Tieren, mit mindestens einem Platzteiler (4) nach einem der vorhergehenden Ansprüche.

## Claims

1. Place divider (4) of a milking parlor arrangement (1, 1', 1", 1‴) for at least one milking parlor (3) for milking milking animals (T), wherein the place divider (4) is arranged at a longitudinal side of the milking parlor (3), comprising an arm device (6, 6', 6", 6‴) with a milking cluster (5), which arm device is adjustable from a parking position into a working position and back, wherein the arm device (6, 6', 6", 6‴) with the milking cluster (5) is arranged in the parking position in the place divider (4) and is displaceable into the working position in such a way that the displacement of the milking cluster (5) from the parking position in the place divider (4) into the working position takes place from the side of the animal to be milked between its front legs and rear legs under the udder of the animal to be milked, **characterized in that** the place divider (4) has a casing (4d, 4d') with two self-supporting half-shells, one section of the half-shells forming a rear section of the place divider, and **in that** the place divider (4) has at least one service unit (46) which can be inserted into a receiving space (47) ) in the rear section (4g) and removed again, which has all service-relevant functional groups and components, including measuring devices and sensors, and which can be locked within the receiving space (47) and connected to an installation (49) via at least one connecting device (48).

2. Place divider (4) according to claim 1, **characterized in that** the receiving space (47) is closed by a cover (45).

3. Place divider (4) according to any one of the preceding claims, **characterized in that** the installation (49) comprises centrally laid lines connecting the devices of the service unit (46) to a control unit (50) arranged on an upper side of a central section (4h) of the place divider (4).

4. Place divider (4) according to one of the preceding claims, **characterized in that** the service unit (46) has a support frame (46a) which can be inserted and locked in the receiving space (47) and supports all components, e.g. a milk group with milk-carrying parts.

5. Place divider (4) according to one of the preceding claims, **characterized in that** the place divider (4) with its functional units and components forms a pre-assembled complete unit.

6. Place divider (4) according to one of the preceding claims, **characterized in that** the arm device (6, 6', 6", 6‴) and the milking cluster (5) can be folded together in a scissor-like manner in the parking position.

7. Place divider (4) according to one of the preceding claims, **characterized in that** the two self-supporting half-shells are formed from a stainless-steel sheet by means of a hydroforming process.

8. Place divider (4) according to one of the preceding claims, **characterized in that** the place divider (4) is provided with quick-release fasteners for connection to an infrastructure of a milking parlor (3) to be assigned.

9. Place divider (4) according to one of the preceding claims, **characterized in that** the place divider (4) is provided with rollers for transport.

10. Milking parlor arrangement (1, 1', 1", 1‴) for milking milk-producing animals, comprising at least one place divider (4) according to any one of the preceding claims.

## Revendications

1. Portillon de séparation (4) d'une installation de traite (1, 1', 1", 1‴) pour au moins un poste de traite (3) pour la traite d'animaux produisant du lait (T), lequel portillon de séparation (4) est disposé sur un côté longitudinal du poste de traite (3), présentant un dispositif de bras (6, 6', 6", 6"') avec un faisceau trayeur (5) qui peut être déplacé d'une position de rangement à une position de travail et retour, le dispositif de bras (6, 6', 6", 6‴) avec le faisceau trayeur (5) étant disposé dans le portillon de séparation (4) dans la position de rangement et pouvant être déplacé dans la position de travail et retour de telle manière que le déplacement du faisceau trayeur (5) de la position de rangement dans le portillon de séparation (4) à la position de travail et retour s'effectue par le côté de l'animal à traire entre le train avant et le train arrière de celui-ci et sous le pis de l'animal à traire, **caractérisé en ce que** le portillon de séparation (4) présente un habillage (4d, 4d') composé de deux demi-coques autoportantes, une partie des demi-coques formant un segment de partie arrière du portillon de séparation, et **en ce que** le portillon de séparation (4) présente au moins une unité de maintenance (46) qui peut être introduite dans un logement (47) dans le segment de partie arrière (4g) et en être retirée, qui comprend tous les groupes fonctionnels et composants concernés par la maintenance, entre autres des installations de mesure et des capteurs, et qui peut être retenue à l'intérieur du logement (47) et raccordée à une installation (49) par au moins un dispositif de raccordement (48).

2. Portillon de séparation (4) selon la revendication 1, **caractérisé en ce que** le logement (47) est fermé par un couvercle (45).

3. Portillon de séparation (4) selon l'une des revendications précédentes, **caractérisé en ce que** l'installation (49) comprend des conduites placées au centre qui raccordent les dispositifs de l'unité de maintenance (46) à une unité de commande (50) disposée sur une face supérieure d'un segment médian (4h) du portillon de séparation (4).

4. Portillon de séparation (4) selon l'une des revendications précédentes, **caractérisé en ce que** l'unité de maintenance (46) comporte un cadre portant (46a) qui peut être inséré et retenu dans le logement (47) et qui porte tous les composants, par exemple un groupe collecteur de lait avec des éléments acheminant le lait.

5. Portillon de séparation (4) selon l'une des revendications précédentes, **caractérisé en ce que** le portillon de séparation (4) forme avec ses unités fonctionnelles et ses composants une unité complète préassemblée.

6. Portillon de séparation (4) selon l'une des revendications précédentes, **caractérisé en ce que** le dispositif de bras (6, 6', 6", 6") et le faisceau trayeur (5) peuvent être repliés à la manière d'un parallélogramme dans la position de rangement.

7. Portillon de séparation (4) selon l'une des revendications précédentes, **caractérisé en ce que** les deux demi-coques autoportantes sont formées à partir d'une tôle d'acier, au moyen d'un procédé d'hydroformage.

8. Portillon de séparation (4) selon l'une des revendications précédentes, **caractérisé en ce que** le portillon de séparation (4) est muni d'attaches rapides pour le raccordement à une infrastructure d'un poste de traite (3) associé.

9. Portillon de séparation (4) selon l'une des revendications précédentes, **caractérisé en ce que** le portillon de séparation (4) est muni de roulettes pour le transport.

10. Installation de traite (1, 1', 1", 1") pour la traite d'animaux produisant du lait, avec au moins un portillon de séparation (4) selon l'une des revendications précédentes.
